# EUROPEAN PATENT SPECIFICATION

(11) **EP 3 927 457 B1**
(45) Date of publication and mention of the grant of the patent: **08.11.2023**
(21) Application number: 20707048.3
(22) Date of filing: 20.02.2020
(51) Int. Cl.: B01J 13/00

(54) **NANOSTRUCTURED HYBRID SOL-GEL COATINGS FOR SURFACE PROTECTION**
NANOSTRUKTURIERTE HYBRIDE SOL-GEL-BESCHICHTUNGEN FÜR OBERFLÄCHENSCHUTZ
ENROBAGES SOL-GEL HYBRIDES NANOSTRUCTURÉS POUR PROTECTION DE SURFACE

(30) Priority: 21.02.2019 GB 201902390
(43) Date of publication of application: 29.12.2021
(73) Proprietor: Kastus Technologies DAC, Dublin 4, D04 RD68 (IE)
(72) Inventor: DUFFY, Brendan, Dublin 8 (IE); OUBAHA, Mohamed, Dublin 8 (IE); KENNEDY, James, Dublin 24 (IE)
(74) Representative: Murgitroyd & Company
(86) International application number: PCT/EP2020/054555
(87) International publication number: WO 2020/169775

(56) References cited:
- WO-A2-2009/069111
- MELIA GARRETT ET AL: "Investigation of the mechanical and thermal fatigue properties of hybrid sol-gel coatings applied to AA2024 substrates", JOURNAL OF COATINGS TECHNOLOGY AND RESEARCH, SPRINGER NEW YORK LLC, US, vol. 13, no. 6, 25 July 2016 (2016-07-25), pages 1083-1094, XP036097147, ISSN: 1547-0091, DOI: 10.1007/S11998-016-9821-5 [retrieved on 2016-07-25]
- M. O'SULLIVAN ET AL: "The Role of the Chelating Agent on the Structure and Anticorrosion Performances of an Organosilane-Zirconium Sol-Gel Coatings", ADVANCES IN MATERIALS PHYSICS AND CHEMISTRY, vol. 08, no. 02, 1 January 2018 (2018-01-01), pages 89-104, XP055697833, ISSN: 2162-531X, DOI: 10.4236/ampc.2018.82007
- VARMA P C R ET AL: "Corrosion protection of AA 2024-T3 aluminium alloys using 3, 4-diaminobenzoic acid chelated zirconium-silane hybrid sol-gels", THIN SOLID FILMS, ELSEVIER, AMSTERDAM, NL, vol. 518, no. 20, 2 August 2010 (2010-08-02), pages 5753-5761, XP027131855, ISSN: 0040-6090 [retrieved on 2010-05-26]

## Description

### Field

The present application relates to nanostructured hybrid sol-gel coatings for surface protection.

### Background Of The Invention

The present invention is particularly useful for providing coatings on metal surfaces, however it is to be understood that the coatings of the invention can also be used on plastic surfaces, including metal coated plastics surfaces and 3D printed/additive manufactured products.

Metals are used as structural materials in many industries including construction, mechanical and electrical engineering, transport and medical. The most commonly used metals are iron, aluminium, copper, titanium and zinc.

After aluminium, iron is the second most abundant metal in the Earth's crust, and it's production exceeds the production of all other metals put together. 98% of iron is used for the fabrication of steel in all its forms (stainless, mild steel and others), which is primarily used in the construction, engineering and transport industries. The world production of steel has been constantly increasing from 1996 (750 millions of tonnes) to exceed 1,600 millions of tonnes in 2016.

Aluminium is the most abundant metal in the Earth's crust and the second most produced metal. Its good electrical and heat conductivity along with its favourable high strength-to-weight ratio made it an excellent material for the electronics and transport industries. For example, modern aircrafts are composed of 75 - 80% of aluminium for the fabrication of fuselage components, skin material and for frame and wing construction. The global automotive industry (excluding China) consumed 2.87 million tonnes of aluminium in 2014, with this figure expected to reach 4.49 million tonnes by 2020. Key factors of this growth include both rising automotive production and wider use of aluminium in modern cars. The main reason for this trend is to reduce the weight of vehicles, by replacing heavy steel parts, and consequently reducing the overall fuel consumption. For this reason, more and more car parts are being made from aluminium: engine radiators, wheels, bumpers, suspension parts, engine cylinder blocks, transmission bodies and body parts: the hoods, the doors and the frame. As a result, since the 1970s the share of aluminium in the overall weight of an average car increased from 35 kg to 152 kg. Experts project that by 2025 average aluminium content in a car will reach 250 kg.

Because of its high conductivity and low production cost, copper is the most utilised metal for electrical applications. Copper forms alloys more freely than any other metal and, as such, is widely employed as alloying element of a large number of metals, including aluminium, tin, nickel, steel and zinc. Copper is however, highly sensitive to environmental corrosion.

Titanium and its alloys have a very favourable strength to mass ratio. They are also resistant to corrosion because their surface develops a thin and resilient oxide layer. They are mainly employed in the aerospace and medical industries where strength, lightness and resistance to corrosion are needed. The major issue of titanium is however, its high cost in comparison with aluminium, copper or steel.

Zinc is mainly used as a sacrificial coating to protect ferrous materials (iron and steel) from corroding in ambient atmosphere. Zinc is also used as alloy and/or alloying element for semi-manufactured products, such as coins, small electrical fuses, anode ribbon for buried pipelines, and to make both decorative and functional products like door handles, marine fittings, plumbing components and screw fixings. Zinc is water resistant but is quite sensitive to acidic and basic environments.

The most widely used metals described above are vulnerable to corrosion and associated environmental effects, and often require a surface treatment to be applied to provide additional corrosion resistance. Surface treatments commonly applied include anodization, conversion coatings, phosphatation and highly cross-linked organic polymeric coatings (water borne or solvent based). These treatments are particular to a specific metal and are therefore not versatile for any metal surface. In addition to this, these treatments are either not fulfilling the current environmental regulations, or more demanding corrosion resistances, processing simplicity or cost.

The inclusion of crosslinking chemistries in pre-determined proportions can decrease the porosity of the coatings and improve the structural strength and anticorrosion properties. Examples of crosslinking chemistries include bis-silanes, diaminoalkanes, diisocyanates, divinylbenzenes, acrylics, amides & polyamides, aziridines, benzoguanamines, carbodiimide resins, glyourils, isocyanates, melamines, polyols, silicon based compounds, urea-formaldehydes, urethanes & polyurethanes.

One of the most important aspects of the design of coatings for corrosion protection is the use of environmentally friendly compounds in the formulation. While many attempts have been reported in the literature focusing on waterborne systems, hybrid sol-gel coatings have received particular attention over the last few decades, as they can be adapted for use as a pre-treatment layer or as a primer on different metallic alloys. Offering a promising alternative to the chromate based systems outlined above, transparent, zirconium based hybrid sol-gel coatings have excellent potential to provide a complete anticorrosive, durable and aesthetically desirable system for the above-mentioned metals.

WO 2009/069111 A2 relates to organosilane coating compositions and the use thereof and describes a sol-gel coating composition comprising a hydrolysed organosilane, an organometallic precursor and a corrosion inhibitor, wherein the corrosion inhibitor is a chelator for the organometallic precursor.

MELIA GARRETT ET AL, "Investigation of the mechanical and thermal fatigue properties of hybrid sol-gel coatings applied to AA2024 substrates", J. Coat. Technol. Res., 13 (6) 1083-1094, 2016 reports on the response of various hybrid sol-gel materials when applied as coatings to pre-treated bare AA2024 substrates.

M. O'SULLIVAN ET AL, "The Role of the Chelating Agent on the Structure and Anticorrosion Performances of an Organosilane-Zirconium Sol-Gel Coatings", Advances in Materials Physics And Chemistry, (20180101), vol. 08, no. 02 reports on the role of the structure of a zirconium complex on the condensation and anticorrosion properties of an organosilane sol-gel coating.

VARMA P C R ET AL, "Corrosion protection of AA 2024-T3 aluminium alloys using 3, 4-diaminobenzoic acid chelated zirconium-silane hybrid sol-gels", Thin Solid Films, Elsevier, Amsterdam, NL, vol. 518, no. 20, ISSN 0040-6090, (20100802), pages 5753 - 5761 describes work where 3,4-diaminobenzoic acid (DABA) and acetyl acetonate (acac) were compared as chelating ligands for controlling the hydrolysis reactions of zirconium n-propoxide to form nanoparticles within a silane sol matrix.

The critical requirements in the design of protective coatings for the protection of metals are high corrosion resistance, including barrier properties and/or corrosion inhibition, high adhesion properties to the substrate to be protected, along with thermal and UV resistance in both neutral and acid humidity. Known metal coatings do not achieve all of these critical requirements. This problem is addressed by the present invention.

In another aspect, the problem of adhesion between two surface layers, and the introduction of multifunctionality to the sol-gel coating, is addressed by the present invention. One of the core challenges, in the use of standard hybrid sol-gels as a direct replacement for chromium based coatings on bare metals, is the poor adhesion between the two surfaces. As a result of this poor adhesion, anticorrosion performances are strongly affected, with delamination observed after short exposure times to corrosive environments.

The present invention seeks to alleviate the disadvantages of known surface coatings, in particular metal surface coatings, including metal coated plastics.

### Summary of the invention

Accordingly, one aspect of the present invention provides compositions as claimed in claim 1, for forming nanostructured hybrid sol-gel coatings for surface protection. The present invention also provides nanostructured hybrid sol-gel coatings and methods of producing said nanostructured hybrid sol-gel coatings as set forth in other independent claims of the appended claims.

The present invention provides compositions for forming multifunctional hybrid sol-gel coatings, the compositions of the present invention comprising combinations of methacrylate silanes and a zirconium alkoxide-based complexes for the protection of metal surfaces against environmental degradation including corrosion, UV exposure, thermal resistance, acid weathering and humidity.

The present invention has the advantage that it provides formulations that are particularly suitable for coating metal surfaces, including metal coated plastics materials. The present invention is particularly useful for forming coatings on metal surfaces, however it is to be understood that the coatings of the present invention can also be used for coating plastics surfaces, including metal coated plastics surfaces and 3D printed/additive manufactured products.

The compositions and coatings of the present invention have the advantage that they provide transparent, zirconium-based hybrid sol-gel coatings which provide a complete anticorrosive, durable and aesthetically desirable system for the above-mentioned metals.

The coatings of the present invention for protection of metals provide the advantages of high corrosion resistance, including barrier properties and/or corrosion Inhibition, high adhesion properties to the substrate to be protected along with thermal and UV resistance in both neutral and acid humidity. The coatings formed by the composition of the present invention have the significant advantage of simultaneously achieving and providing all these properties by providing highly densified hybrid sol-gel coatings with surfaces functionalised with highly adherent inorganic chemistries.

The disclosure provides for the use of a sol-gel coating composition as described herein as an anti-corrosion coating suitable for a metal surface.

The disclosure also provides for the use of a chelate as described herein as an anti-corrosion coating suitable for a metal surface.

The present invention provides highly densified hybrid sol-gel coatings with surfaces functionalised with highly adherent inorganic chemistries.

The invention also provides a method for preparing the hybrid sol-gel coatings of the present invention. Advantageous embodiments of the hybrid sol-gel coating and of the method of preparation, respectively, are provided in the dependent claims.

An advantage of the present invention is that it simultaneously demonstrates properties of high corrosion resistance, including barrier properties and/or corrosion inhibition as well as high adhesion properties to the substrate to be protected, together with thermal and UV resistance in both neutral and acid humidity.

### Zr Chemistry

The organometallic precursor of the present invention, is a transition metal precursor which comprises zirconium. The zirconium precursor may be zirconium (VI) propoxide (Zr(OPr)₄).

The organometallic precursor is a precursor of zirconium. The inclusion of a zirconium precursor is understood to improve the adhesion of the coating, and/or the pH stability of the coating, and/or the film hardness. The zirconium precursor of choice is zirconium (VI) n-propoxide (Zr(OPr)₄) (70% weight in 2-propanol). The zirconium precursor has a greater reactivity to water when compared to the reactivity of the organosilane precursor. Therefore, to avoid formation of undesired zirconium oxide precipitate, the Zr(OPr)₄ must be chelated, reducing its potential for binding from 4 to 2 (or 1) sites. This is achieved by using a bidentate (or monodentate) ligand in an equimolar ratio. Typical chelates include carboxylic acids such as methacrylic acid and acetic acid (and also (3-aminopropyl)triethoxysilane). When MAPTMS is used at the host matrix former, methacrylic acid is the preferred ligand as it contains methacrylic functionalities which can further polymerize with the organic counterpart of the silane and minimise porosity of the coatings.

### Tridentate silanes

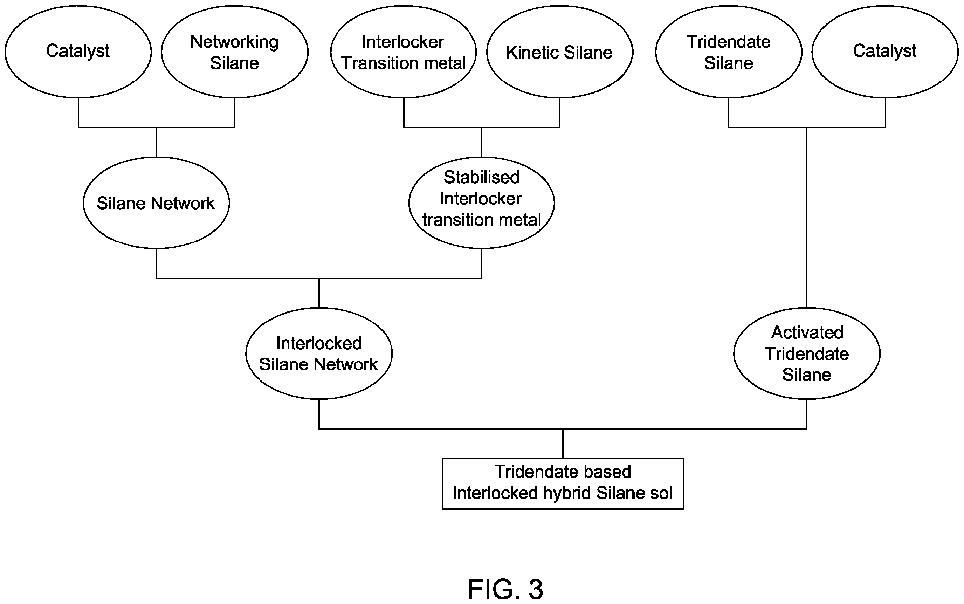

In another aspect of the present invention, the problem of poor adhesion in the use of sol-gel coatings is addressed. The most popular known strategy to increase adhesion of organic and sol-gel coatings on metal is by mechanical interlocking through an anodic layer deposited on the metal. The present invention also provides tridentate silanes that will simultaneously enable the irreversible immobilisation of sol-gel nanomaterials on a metal surface while also contributing to the densification process of the coating on the metal substrate. In this aspect, the present invention accordingly also provides a method, outlined at Figure 3, for preparing sol-gel coatings using the following as precursors: MAPTMS (3-(trimethoxysilyl)propyl methacrylate), BTSPA (bis[3-(trimethoxysilyl)propyl]amine), APTES (3-(aminopropyl)triethoxysilane) or MAAH (methacrylic acid), and ZPO (Zirconium (IV) propoxide), wherein the catalyst is HNO₃ (nitric acid), the networking silane precursor is MAPTES, the interlocker transition metal is ZPO, the kinetic silane is APTES, and the tridentate silane is BTSPA.

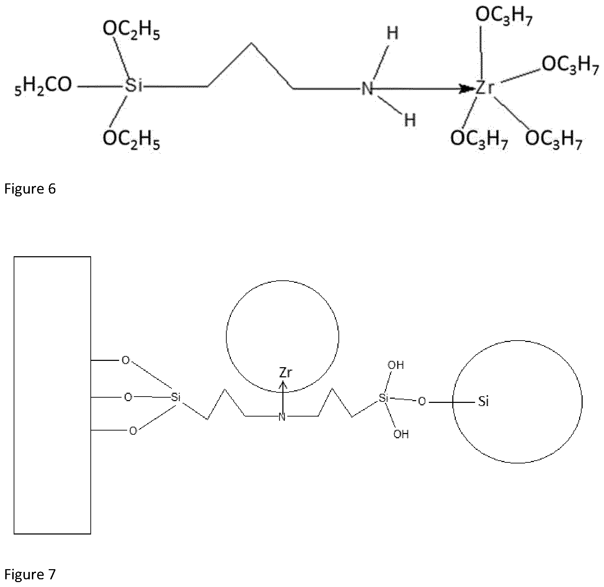

APTES is included to form a coordination bond with the zirconium propoxide *via* sharing its pair of free electrons located on the nitrogen atom with the d free orbitals of the zirconium atom (Figure 6). This has the effect of increasing the sterical hindrance around the silicon atom, thus reducing its reactivity in liquid in presence of strong hydrophilic species, such as water. Importantly, this has the major benefit of providing an anchoring point to the MAPTMS *via* the occurrence of condensation reactions between the APTES and the residual Si-OH groups located on the MAPTMS activated by an aqueous solution of nitric acid, employed as a catalyst, thus acting as network interlocker.

BTSPA is included as a tridentate silane sol-gel reactive precursor and is used within the transition metal interlocked silane nanomaterial system.

The tridentate silane is first activated by the catalyst prior to being incorporated at the end of the sol-gel synthesis, thus reacting as a surface modifier of the interlocked nanomaterial material, as shown in Figure 6. This surface functionalisation has beneficial effects for the further condensation of the nanomaterial and its irreversible anchoring on the metal substrate: the tridentate silane possesses six reactive silanol groups that can bind simultaneously with the silane component of the interlocked silane nanomaterial system and the metal surface, along with the amino group that can bind with the zirconium atom similarly to the APTES. Therefore, the BTSPA is effectively acting as a tridentate system, as shown in Figure 7.

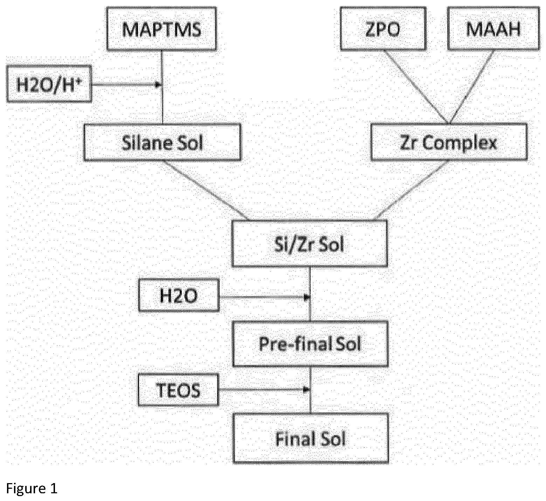

In the first aspect, the present disclosure provides a formulation for forming a novel highly densified hybrid sol-gel coating based on the interconnectivity of two hybrid networks formed from a methacrylate silane, preferably, 3-(trimethoxysilyl)propyl methacrylate (MAPTMS) and a transition metal complex, preferably a complex of zirconium, as shown in Figure 1 of the accompanying drawings.

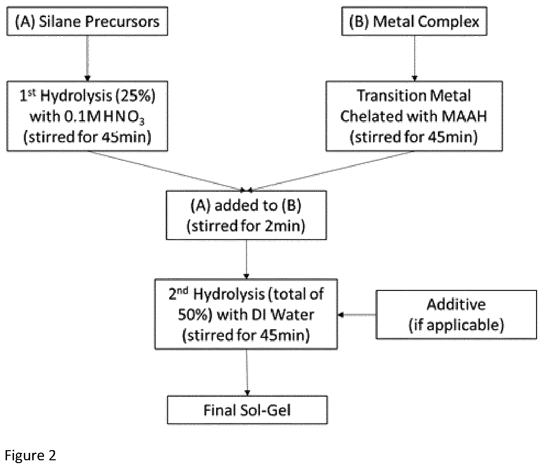

In a second aspect, the present invention provides the development and use of a novel highly densified hybrid sol-gel coating based on the interconnectivity of two hybrid networks formed from combinations of the silane precursors (PhTEOS (phenyltriethoxysilane) / TEOS (tetraethyl orthosilicate) / MAPTMS) in varying combinations and ratios, and a complex of zirconium (and optionally TIOP (titanium isopropoxide)), chelated with either MAAH or APTES, and an additive comprising BTSPA. The varying combination and ratios of the sol-gel formulation ingredients is outlined in Table 1, and the method for forming the sol-gel coatings according to the second aspect of the invention is outlined at Figure 2.

Preferably, the present invention provides a highly densified hybrid sol-gel coating based on the interconnectivity of two hybrid networks formed from a methacrylate silane and a transition metal complex.

In a first aspect of the disclosure, in the final stages of a process for forming coatings of the present invention, tetraethyl orthosilicate (TEOS) may be added to improve the ability of the Si/Zr sol to form a dense coating. The TEOS essentially coats the colloidal Si/Zr and improves their ability to bond together. The addition of TEOS has been found to achieve improved coating formation.

In a second aspect of the invention, in the final stages of a process for forming coatings of the present invention, additives (BTA, BTSPA, colloidal silica etc. but at least comprising BTSPA) are added to improve the performance of the resulting sol-gel coatings.

| **Chemical** | **Abbreviated Chemical name** |
|---|---|
| Tetraethyl orthosilicate | TEOS |
| Phenyltriethoxysilane | PhTEOS |
| 3-(Trimethoxysilyl)propyl methacrylate | MAPTMS |
| (3-Aminopropyl)triethoxysilane | APTES |
| Bis[3-(trimethoxysilyl)propyl]amine | BTSPA |
| Zirconium Propoxide | ZPO |
| Titanium Isopropoxide | TIOP |
| Methacrylic Acid | MAAH |

### Chemicals used in sol-gel formulations and abbreviated names

The present invention provides a highly densified hybrid sol-gel coating based on the interconnectivity of two hybrid networks formed from a methacrylate silane and a transition metal complex.

Accordingly, the present invention provides a hybrid sol-gel coating formulation comprising the following:
(a) an organosilane or a mixture of organosilanes, comprising at least the organosilane precursor, MAPTMS (3-(Trimethoxysilyl)propyl methacrylate);
(b) a metal complex, comprising Zirconium and a ligand;
(c) an additive and optionally a solvent; wherein the additive comprises BTSPA.

Preferably the formulation comprises a catalyst, and more preferably the catalyst comprises HNO₃.

Preferably, the additive comprises any one or more selected from the following:
BTSPA (bis[3-(trimethoxysilyl)propyl]amine), BTA (benzotriazole), TEOS (tetraethyl orthosilicate), colloidal silica, or a combination thereof.

In one preferred embodiment, the additive comprises a corrosion inhibitor, which is preferably BTA;
BTSPA is included as an additive to promote adhesion to the surface, when in use, by forming a tridentate based interlocked hybrid silane sol.

When used as an additive, TEOS improves the bonding between the silane precursors and the metal complex, and has been found to achieve improved coating formation.

Preferably, the solvent comprises any one or more selected from C₁ - C₄ alcohols.

In a preferred embodiment, the alcohol comprises ethanol.

Preferably, the ethanol is in the range of 0 - 25 % w/w.

When colloidal silica is used as an additive, it is used preferably in the range of 0.25 - 1.25% w/w.

Preferably, BTSPA is used in the range of 0.5 - 10% w/w.

Preferably, BTA is in the range of 0.2 - 1.5% w/w.

Preferably, BTSPA is catalysed by using 0.1M HNO₃ (nitric acid) prior to the addition in step (d) of the method for preparing the hybrid sol-gel formulation.

Preferably, the organosilane comprises one or a combination of organosilane precursors selected from PhTEOS (phenyltriethoxysilane), TEOS or MAPTMS, or a combination thereof. The methacrylate silane comprises MAPTMS.

Preferably, the metal complex comprises Zirconium and / or Titanium, and more preferably wherein the metal complex comprises Zirconium (IV) propoxide and / or titanium isopropoxide.

In one embodiment, Titanium isopropoxide is used in conjunction with Zirconium (IV) propoxide for improved cross-linking and surface energy.

Preferably the metal complex comprises a monodentate or a bidentate ligand. In one preferred embodiment, the ligand comprises MAAH (methacrylic acid). In another embodiment the ligand comprises APTES ((3-aminopropyl)triethoxysilane).

In one preferred embodiment, the molar ratio of the ingredients of the formulation comprise a molar ratio of 80 : 20, silane precursor: metal complex, more preferably wherein the ingredients of the formulation are included in the molar ratio of 75:5:10:10, MAPTMS:TEOS:Zr:MAAH.

Preferably, the molar ratio of ingredients comprise a molar ratio of organosilane precursors : metal complex of 50 : 50 to 99 : 1, and preferably in the ratio of 80 : 20.

In another aspect, the present invention also provides a method for preparing a hybrid sol-gel formulation, the method comprising the following steps:
(a) Hydrolysing a silane precursor;
(b) Chelating a metal to form a metal complex;
(c) Combining the organosilane precursor and the metal complex to form an intermediate sol;
(d) Hydrolysing the intermediate sol to form a pre-final sol, and
(e) adding an additive and optionally a solvent to form a final sol; wherein said silane precusors comprise at least the organosilane precursor MAPTMS and wherein said metal complex comprises Zirconium (Zr) and a ligand; and wherein the additive comprises BTSPA.

It is to be understood that in one embodiment, the "pre-final" sol can be used as a formulation for coating on the substrate.

In a preferred embodiment, in step (a), the silane precursors are hydrolysed with an aqueous solution of HNOs, and wherein the HNO₃ solution is added dropwise to the mixture.

In a preferred embodiment, in step (d), the intermediate sol is hydrolysed with deionised water.

The present disclosure also provides a coating formed according to the formulation of the present invention.

The present invention also provides a coated substrate prepared by coating the formulation of the present invention onto a surface.

The present disclosure provides a sol-gel coating composition comprising a hydrolysed organosilane, an organometallic precursor and a ligand, wherein the ligand is a chelator for the organometallic precursor and wherein the ratio of the organosilanes to Zirconium complex is 8:2.The organosilane comprises methacryloxypropyltrimethoxysilane (MAPTMS) and/or tetra-ethyl-ortho-silicate (TEOS).

Preferably, the ingredients are included in the molar ratio of 75 : 5 : 20 : 20, MAPTMS : TEOS : Zr : MAAH. This can also be expressed as a preferred molar ratio of 80 : 20, Silanes : Zirconium.

### Preferred ratios in the formulation:

The ratios used are

| |
|---|
| MAPTMS : TEOS : Zr : MAAH |
| 75 : 5 : 10 : 10 |

Or this can also be expressed as:

| | |
|---|---|
| Silanes : Zirconium | 80 : 20 |

In a second aspect, the present invention also provides sol-gel formulations prepared according to the flow diagram of Figure 2.

Hybrid sol-gel coatings based on the combination of a silane network former and a transition metal network interlocker, stabilised by a kinetic silane and a tridendate silane, using BTSPA, may be prepared according to the method of the second aspect of the invention.

The present invention will now be described more particularly with reference to the accompanying drawings and in the following Examples.

In the drawings:
Figure 1 is a schematic diagram showing the steps in the preparation method of the multifunctional hybrid sol-gel coating according to the first aspect of the present disclosure;
Figure 2 is a Process Flow for Synthesis of a Sol-Gel according to a second aspect of the present disclosure;
Figure 3 is a flow diagram outlining a preparation method an interlocked tridentate hybrid sol-gel material according to the second aspect of the disclosure;
Figure 4 is a flow diagram outlining a method of preparation of a sol-gel coating according to the second aspect of the invention, in particular the F006 formulation;

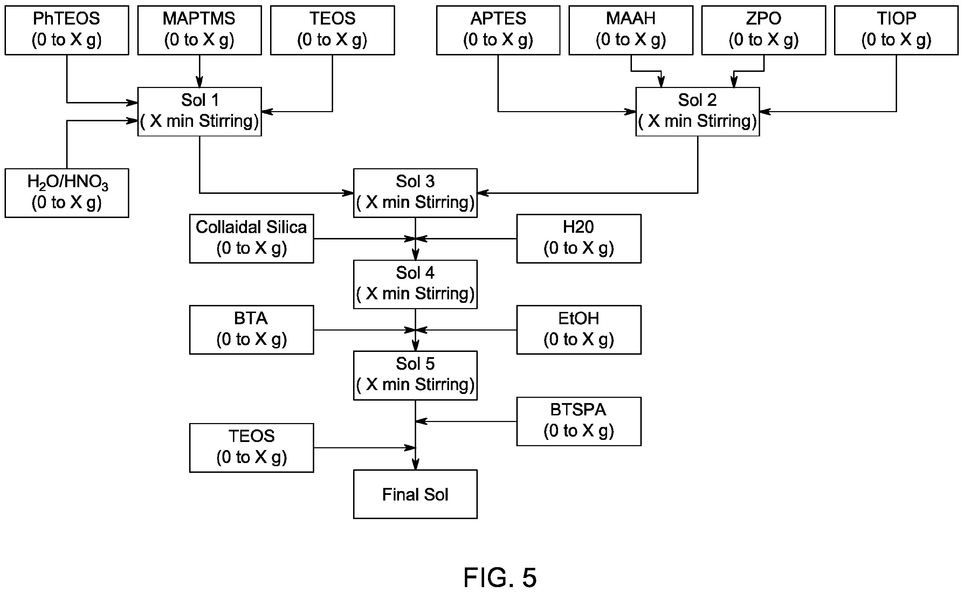

Figure 5 is a flow diagram outlining a method of preparation of a sol-gel coating according to the first and second aspects of the present invention;
Figure 6 is a diagram showing the coordination reaction between APTES and zirconium propoxide;
Figure 7 is a diagram shows the reaction between the tridentate silane and the interlocked nanomaterial at a metal surface;

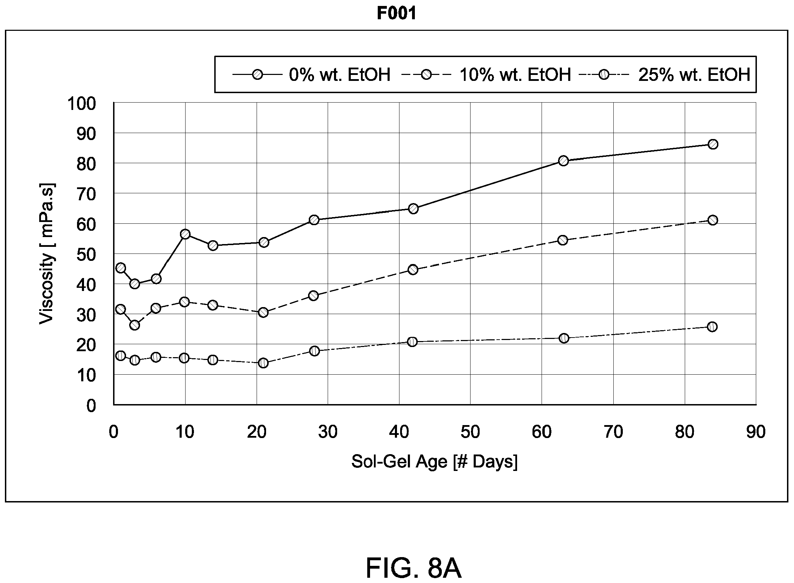

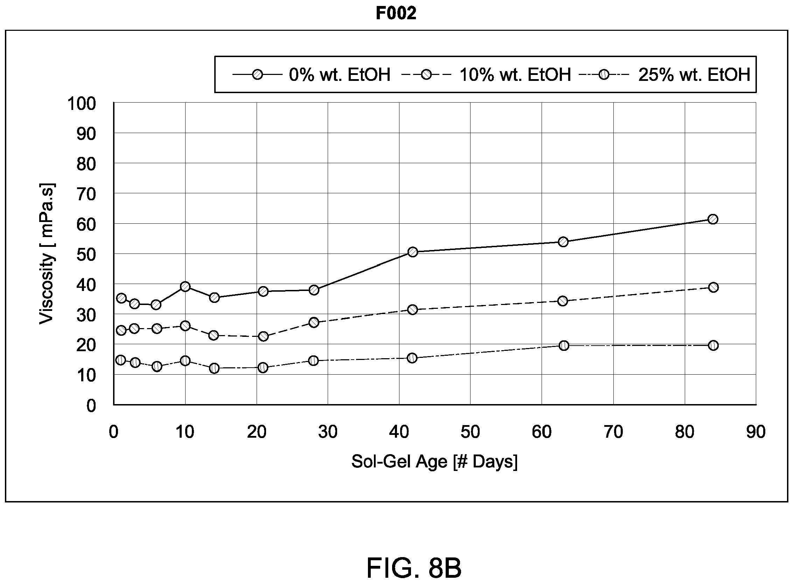

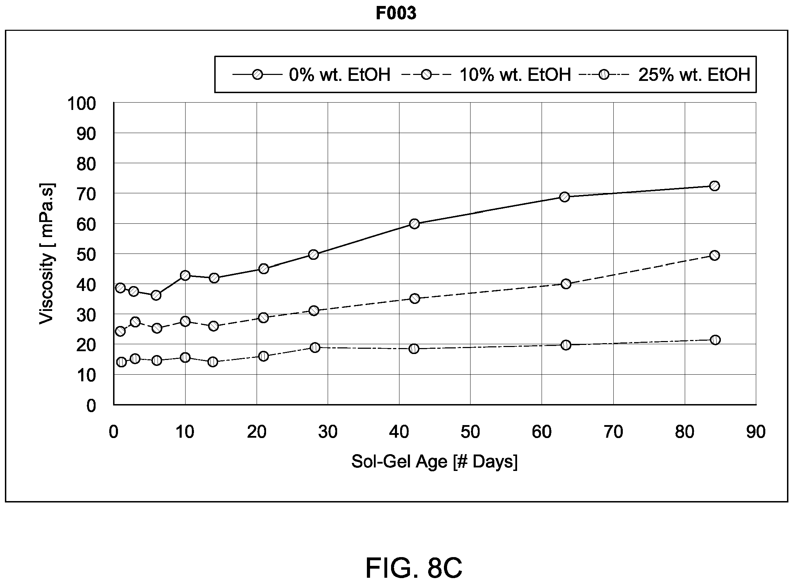

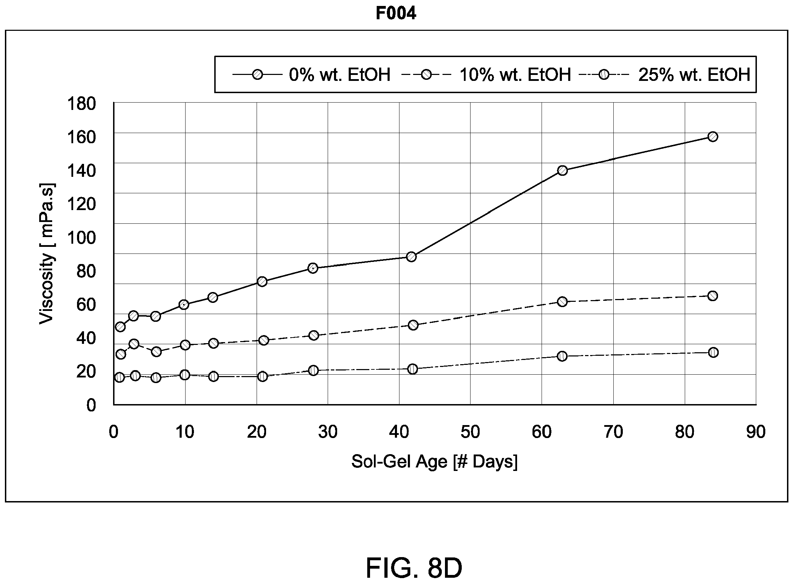

Figure 8 (a), (b), (c) and (d) show graphs of the Sol-gel viscosity of formulations F001-F004 of the following examples (Figure 8 (a) - F001, Figure 8 (b) - F002,
Figure 8 (c) - F003, Figure 8 (d) - F004) versus time at different dilutions with ethanol (EtOH);
Figure 9 (a), (b), (c), (d) and (e) shows graphs of Sol-gel viscosity of formulation F005 versus time at different dilutions with ethanol (EtOH) and concentrations of BTSPA ((a) 0.0% wt. BTSPA, (b) 0.5% wt. BTSPA, (c) 1.0% wt. BTSPA, (d) 2.5% wt. BTSPA, (e) 5.0% wt. BTSPA);
Figure 10 (a), (b), (c) and (d) shows a Weight loss trace from TGA on four sol-gel formulations, respectively, ((a) F001, (b) F002, (c) F003, (d) F004);
Figure 11 (a), (b), (c) and (d) is a Heat flow trace from TGA on four sol-gel formulations, respectively ((a) F001, (b) F002, (c) F003, (d) F004);
Figure 12 is a graph of the Time taken for pendulum to dampen from 6° to 3°. Higher values indicates a harder coatings. Substrate: R-ICF Q-panel;
Figure 13 is a graph of the Water contact angle for formulations F001 - F005. Substrate: R-ICF Q-panel;
Figure 14 is R-ICF panels coated with F001 after 24hrs in NSS.Each row is a different dip-speed. Each column represents number of sol-gel coatings;
Figure 15 is R-ICF panels coated with F002 after 24hrs in NSS. Each row is a different dip-speed. Each column represents number of sol-gel coatings;
Figure 16 is R-ICF panels coated with F003 after 24hrs in NSS. Each row is a different dip-speed. Each column represents number of sol-gel coatings;
Figure 17 is R-ICF panels coated with F004 after 24hrs in NSS. Each row is a different dip-speed. Each column represents number of sol-gel coatings;
Figure 18 (a), (b) and (c) shows Mild steel with 3^{rd} party silane (3PS) coating pre-treatment after 336hrs NSS (a) 3PS only (b) 3PS & Sol-Gel System 'E' (F001) (c) 3PS & Sol-Gel System 'J' (F005 & F001);
Figure 19 (a) and (b) shows Galvanised steel with 3^{rd} party silane (3PS) pre-treatment after 336hrs NSS (a) 3PS only (b) 3PS & Sol-Gel System 'J' (F005 & F001);
Figure 20 (a), (b), (c), (d) and (e) shows Aluminium 6000-series alloy after 336hrs NSS (a) Uncoated (b) Sol-Gel System 'D' (F001 x2) (c) Sol-Gel System 'F' (F003 x2) (d) Sol-Gel System 'I' (F005) (e) Sol-Gel System 'J' (F005 & F001);
Figure 21 (a), (b), (c), (d) and (e) shows Aluminium 6000-series alloy with 3^{rd} party silane (3PS) pre-treatment after 336hrs NSS (a) 3PS only (b) 3PS Sol-Gel System 'A' (F001) (c) 3PS & Sol-Gel System 'E' (F003) (d) 3PS & Sol-Gel System 'I' (F005) (e) 3PS & Sol-Gel System 'J' (F005 & F001);
Figure 22 is Aluminium 2024T3 with various anodised surface treatments and sol-gel seals after 500hrs in an NSS;
Figure 23 (a), (b) and (c) is SEM images of uncoated 3D printed part (a), sol-gel coated part (b) and a 3D printed part that was first abraded and then etched in hydrofluoric acid (HF) prior to coating (c);
Figure 24 (a), (b), (c), (d), (e) and (f) is Energy dispersive x-ray (EDX) of sol-gel coated 3D printed part. (a) corresponding SEM image (b) silicon (c) Zirconium top-right (d) Aluminium (e) Titanium bottom-middle (f) EDX spectrum.

Referring to the flow diagram of Figure 1, a process according to the first aspect of the disclosure, will now be described:
**(a) Organosilane hydrolysis to form the silane sol**
   A first organosilane hydrolysis was effected by hydrolysing the organosilane, MAPTMS with an aqueous HNO₃ 0.01M solution in a 1 : 0.75 volume ratio (below this ratio, precipitation of zirconium species occurred during the second hydrolysis). As MAPTMS and water are not miscible, the hydrolysis was performed heterogeneously. After 20 minutes of stirring, the production of methanol became sufficient to allow the miscibility of all species present in solution;
**(b) Zirconium Chelation to form the Zirconium Complex**
   MAAH was added dropwise to ZPO with a molar ratio of 1:1 MAAH reacted on ZPO agent to form a modified zirconium alkoxide Zr(OPr)₄₋₂ₓ(MAA)ₓ where MAA is the deprotonated form of MAAH;
**(c) Organosilane Zirconium Combination to form the Si/Zr Sol**
   After a pre-determined time has elapsed, preferably about 45 minutes, the partially hydrolysed MAPTMS was slowly added to the zirconate complex. This mixture is characterized by a temperature increase, demonstrating the formation of irreversible chemical bonds;
**(d) Hydrolysis to form the Pre-final Sol**
   Following another pre-determined time has elapsed, preferably, about 2 minutes, water was then added to this mixture. This second hydrolysis leads to a stable and homogeneous sol after a pre-deteremined hydrolysis time, preferably, about 45 minutes; and
**(e) Formation of the Final Sol**
   TEOS (0.33g) was added to the Pre-final Sol to form the Final Sol.

### Example 1 (not according to the invention)

| Precursors | Precursors Content (%) | Weight (grams) |
|---|---|---|
| 3-(trimethoxysilyl)propyl methacrylate (MAPTMS) | 79.5 | 61.22 |
| Zirconium n-propoxide (ZPO) | 20 | 28.25 |
| Methacrylic acid (MAAH) | 20 | 5.30 |
| Tetraethyl orthosilicate (TEOS) | 0.5 | 0.33 |
| H₂0 / HN0₃ | - | 3.20 |
| H₂0 | - | 6.60 |

In all Examples, methacrylic acid (MAAH) was used as the chelating agent. The following process was carried out:
**(a) Organosilane Hydrolysis to form the Silane Sol**
   Organosilane hydrolysis was effected by hydrolysing MAPTMS (61.22g) with an aqueous HNO₃ 0.01M solution in a 1 : 0.75 volume ratio (below this ratio, precipitation of zirconium species occurred during the second hydrolysis). As MAPTMS and water were not miscible, the hydrolysis was performed in a heterogeneous way. After 20 minutes of stirring, the production of methanol became sufficient to allow the miscibility of all species present in solution.
**(b) Zirconium Chelation to form the Zirconium Complex**
   MAAH (5.30g) was added dropwise to ZPO (28.25g) with a molar ratio of 1:1 MAAH reacted on ZPO agent to form a modified zirconium alkoxide Zr(OPr)₄₋₂ₓ(MAA)ₓ where MAA is the deprotonated form of MAAH.
**(c) Organosilane Zirconium Combination to form the Si/Zr Sol**
   After 45 minutes, the partially hydrolysed MAPTMS was slowly added to the zirconate complex. This mixture is characterized by a temperature increase, demonstrating the formation of irreversible chemical bonds.
**(d) Hydrolysis to form the Pre-final Sol**
   Following another predetermined time, about 2 minutes, water was then added to this mixture. This second hydrolysis leads to a stable and homogeneous sol after a hydrolysis time of about 45 minutes.
**(e) Formation of the Final Sol**
   TEOS (0.33g) was added to the Pre-final Sol to form the final Sol with a final molar ratio of 75 : 5 : 20 : 20, MAPTMS : TEOS : Zr : MAAH or 80 : 20, Silanes : Zirconium.

### Example 2 (not according to the invention)

The process steps were carried out as for Example 1 with the following amounts being used:

| | Precursors | Precursors content (%) | | Weight (grams) | |
|---|---|---|---|---|---|
| 3-(trimethoxysilyl)propyl methacrylate (MAPTMS) | | | 70 | | 60.00 |
| Zirconium n-propoxide (ZPO) | | | 25 | | 28.84 |
| Methacrylic acid (MAAH) | | | 25 | | 7.56 |

| | | | | | |
|---|---|---|---|---|---|
| | Tetraethyl orthosilicate (TEOS) | | 5 | | 3.72 |
| | H₂O / HNO₃ | | - | | 4.40 |
| | H₂O | | - | | 4.80 |

### Example 3 (not according to the invention)

The process steps were carried out as for Example 1 with the following amounts being used:

| Precursors | Precursors content (%) | Weight (grams) |
|---|---|---|
| 3-(trimethoxysilyl)propyl methacrylate (MAPTMS) | 78 | 60.00 |
| Zirconium n-propoxide (ZPO) | 19.5 | 20.19 |
| Methacrylic acid (MAAH) | 19.5 | 10.71 |
| Tetraethyl orthosilicate (TEOS) | 2.5 | 1.68 |
| H₂O / HNO₃ | - | 2.70 |
| H₂O | - | 8.13 |

The coatings of the present invention provide surprisingly effective metals coating protection and provide all of the above referenced requirements of a coating.

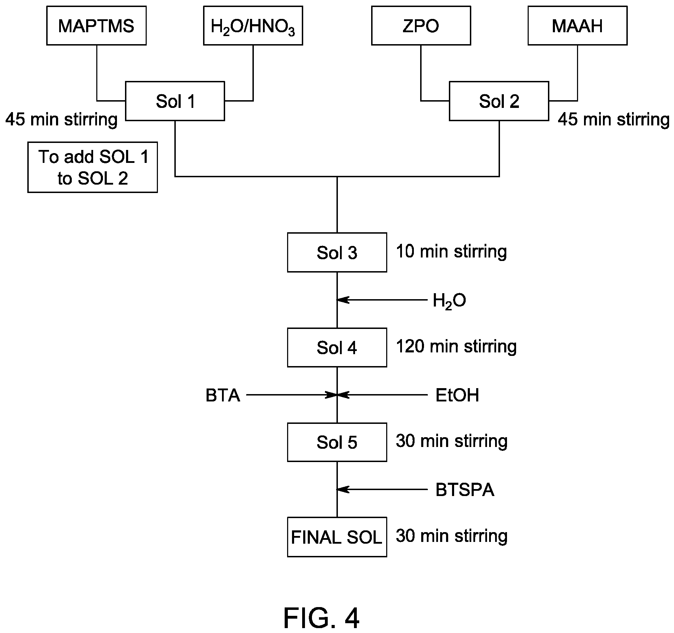

6 Sol-gel formulations (F001 - F006) were prepared according to a second aspect of the present invention as follows, and according to the flow diagram of Figure 2 (and Figure 4):
- The silane precursor(s) (A) are first mixed with a magnetic stirrer until homogenised. Next, 0.1M nitric acid in deionised water is added to the silane mixture to hydrolyse the alkoxide functional groups. At this stage, 25% of the alkoxide groups are hydrolysed. The 0.1M HNO₃ catalyst is added dropwise to avoid shocking the silane mixture.
- In parallel, the transition metal (either ZPO and/or TIOP) is chelated with the methacrylic acid to form the metal complex (B) (this is not the case for F005, where APTES is used). The methacrylic acid chelates x2 of the alkoxide functional groups in the ZPO.
- After 45mins of stirring the silane precursors (A) and metal complex (B), the silane precursor is added to the metal complex and allowed to stir for an additional 2mins. Initially, the silane is added dropwise to avoid any potential precipitation.
- When (A) and (B) are mixed, the second hydrolysis is performed. For this hydrolysis, deionised water is added to bring the total hydrolysis to 50% of the alkoxide groups in the sol-gel.
- If applicable, any additives (e.g. colloidal silica, BTSPA, BTA) and/or solvents (e.g. ethanol) are added at this stage.
- The final sol-gel mixture is allowed to stir for a further 45mins.

Regarding the synthesis of formulation F005:
- It is important that the zirconium isopropoxide (ZPO) is added to the APTES (and not the other way around). It was noted that this prevented the APTES from precipitating out of the mixture.
- The BTSPA can be catalysed (or activated) with 0.1M Nitric Acid in deionised water prior to it being added to the sol-gel. A level of 10% hydrolysis was found to be quite stable over time. Higher levels would result in the BTSPA gelling within a few hours.

The activated BTSPA should only be added to the sol-gel just before a part is to be coated. This is especially important for high concentrations of BTSPA (e.g. 5.0% weight) as the sol-gel will gel rapidily (< 2 hours) with constantly increasing viscosity.

Prior to dip coating, the sol-gel is filtered using a 1.0 micron PTFE syringe filter to remove any large agglomerates or contaminats. If needed, the sol-gel can be diluted down with a solvent (e.g. ethanol or isopropanol) to decrease viscosity and increase shelf-life.

Each formulation is briefly described in Table 1 with each formulation broken down into three main components; 1) the mixture of Silane Precursors, 2) the Metal Complex & 3) the Additives. The full chemical names of the abbreviated description used in Table 1 are shown in in the "Summary of Invention" Section.

**Table 1: Sol-gel formulations investigated in present study (formulations F001-F004 are not according to the invention).**

| Formulation # | Silane Precursors | Metal Complex | Additive | Solvent |
|---|---|---|---|---|
| F001 | PhTEOS / TEOS / MAPTMS | ZPO / MAAH | Levasil (Colloidal Silica) | N/A |
| F002 | PhTEOS / TEOS / MAPTMS | ZPO / MAAH | Levasil (Colloidal Silica) | N/A |
| F003 | PhTEOS / TEOS / MAPTMS | ZPO / TIOP / MAAH | N/A | N/A |
| F004 | MAPTMS / TEOS | ZPO / MAAH | N/A | N/A |
| F005 | MAPTMS | ZPO / APTES | BTSPA | Ethanol |
| F006 | MAPTMS | ZPO / MAAH | BTSPA, BTA | Ethanol |

Formulations F001-to-F003 were developed as hard, hydrophobic & scratch resistant coatings, and aesthetic surface finishes. F004 was developed as a corrosion resistance sealer for anodized aluminium alloys. Formulation F005 is intended as having adhesion promoting properties. Formulation 6 is intended to be both a corrosion resistance sealer and an adhesion promoter.

### Sol-Gel Formulations F001 - F006 (F001-F004 are not according to the invention)

A more detailed breakdown of each of the sol-gel formulations, F001-to-F006, are shown in Table 2 to Table 41. Each formulation contains of a mixture of Silane Precursors, a Metal Complex and, where applicable, an additive to impart additional functionality, and also where applicable, a solvent. The percentage of the additives are expressed in % w/w of the wet sol-gel to which they are added. The tables corresponding to the formulations used in testing the performance of the sol-gel formulations are labelled with an asterix (*):

**Table 2 Formulation for Sol-Gel F001**

| | **SILANE PRECURSORS** | | | **METAL COMPLEX** | | **1st Hydrolysis** | **2nd Hydrolysis** | **ADDITIVE** |
|---|---|---|---|---|---|---|---|---|
| **Final Concentration [mol. %]** | 50 | | | 50 | | N/A | N/A | N/A |
| | | | | *Metal* | *Chelate* | *Catalyst* | *DI Water* | |
| **Chemical** | **PhTEOS** | **TEOS** | **MAPTMS** | **ZPO** | **MAAH** | **HNO3 (0.1M)** | **H2O** | **Levasil 200** |
| **Component Concentration [mol. %]** | 47.8 | 4.9 | 47.3 | 100 | 100 | N/A | N/A | 0.25 -1.5% of Sol-Gel Weight |
| **Indv. Weight [g]** | 13.507 | 1.200 | 13.809 | 55.01 | 10.222 | 1.614 | 4.638 | 0.5 |

**Table 3 Formulation for Sol-Gel F001**

| | **SILANE PRECURSORS** | | | **METAL COMPLEX** | | **1st Hydrolysis** | **2nd Hydrolysis** | **ADDITIVE** |
|---|---|---|---|---|---|---|---|---|
| **Final Concentration [mol. %]** | 70 | | | 30 | | N/A | N/A | N/A |
| | | | | *Metal* | *Chelate* | *Catalyst* | *DI Water* | |
| **Chemical** | **PhTEOS** | **TEOS** | **MAPTMS** | **ZPO** | **MAAH** | **HNO3 (0.1M)** | **H2O** | **Levasil 200** |
| **Component Concentration [mol. %]** | 47.8 | 4.9 | 47.3 | 100 | 100 | N/A | N/A | 0.25 -1.5% of Sol-Gel Weight |
| **Indv. Weight [g]** | 22.143 | 1.967 | 22.639 | 38.651 | 7.182 | 2.646 | 4.771 | 0.5 |

**Table 4: Formulation for Sol-Gel F001**

| | **SILANE PRECURSORS** | | | **METAL COMPLEX** | | **1st Hydrolysis** | **2nd Hydrolysis** | **ADDITIVE** |
|---|---|---|---|---|---|---|---|---|
| **Final Concentration [mol. %]** | 80 | | | 20 | | N/A | N/A | N/A |
| | | | | *Metal* | *Chelate* | *Catalyst* | *DI Water* | |
| **Chemical** | **PhTEOS** | **TEOS** | **MAPTMS** | **ZPO** | **MAAH** | **HNO3 (0.1M)** | **H2O** | **Levasil 200** |
| **Component Concentration [mol. %]** | 47.8 | 4.9 | 47.3 | 100 | 100 | N/A | N/A | 0.25 -1.5% of Sol-Gel Weight |
| **Indv. Weight [g]** | 27.673 | 2.459 | 28.293 | 28.177 | 5.236 | 3.306 | 4.856 | 0.5 |

**Table 5: Formulation for Sol-Gel F001**

| | **SILANE PRECURSORS** | | | **METAL COMPLEX** | | **1st Hydrolysis** | **2nd Hydrolysis** | **ADDITIVE** |
|---|---|---|---|---|---|---|---|---|
| **Final Concentration [mol. %]** | 87.55 | | | 12.45 | | N/A | N/A | N/A |
| | | | | *Metal* | *Chelate* | *Catalyst* | *DI Water* | |
| **Chemical** | **PhTEOS** | **TEOS** | **MAPTMS** | **ZPO** | **MAAH** | **HNO3 (0.1M)** | **H2O** | **Levasil 200** |
| **Component Concentration [mol. %]** | 47.8 | 4.9 | 47.3 | 100 | 100 | N/A | N/A | 0.25 -1.5% of Sol-Gel Weight |
| **Indv. Weight [g]** | 32.586 | 2.895 | 33.315 | 18.873 | 3.507 | 3.893 | 4.931 | 0.5 |

**Table 6: Formulation for Sol-Gel F001***

| | **SILANE PRECURSORS** | | | **METAL COMPLEX** | | **1st Hydrolysis** | **2nd Hydrolysis** | **ADDITIVE** |
|---|---|---|---|---|---|---|---|---|
| **Final Concentration [mol. %]** | 91.25 | | | 8.75 | | N/A | N/A | N/A |
| | | | | *Metal* | *Chelate* | *Catalyst* | *DI Water* | |
| **Chemical** | **PhTEOS** | **TEOS** | **MAPTMS** | **ZPO** | **MAAH** | **HNO3 (0.1M)** | **H2O** | **Levasil 200** |
| **Component Concentration [mol. %]** | 47.8 | 4.9 | 47.3 | 100 | 100 | N/A | N/A | 0.25 -1.5% of Sol-Gel Weight |
| **Indv. Weight [g]** | 35.276 | 3.134 | 36.066 | 13.777 | 2.56 | 4.215 | 4.972 | 0.5 |

**Table 7: Formulation for Sol-Gel F001**

| | **SILANE PRECURSORS** | | | **METAL COMPLEX** | | **1st Hydrolysis** | **2nd Hydrolysis** | **ADDITIVE** |
|---|---|---|---|---|---|---|---|---|
| **Final Concentration [mol. %]** | 93.75 | | | 6.25 | | N/A | N/A | N/A |
| | | | | *Metal* | *Chelate* | *Catalyst* | *DI Water* | |
| **Chemical** | **PhTEOS** | **TEOS** | **MAPTMS** | **ZPO** | **MAAH** | **HNO3 (0.1M)** | **H2O** | **Levasil 200** |
| **Component Concentration [mol. %]** | 47.8 | 4.9 | 47.3 | 100 | 100 | N/A | N/A | 0.25 -1.5% of Sol-Gel Weight |
| **Indv. Weight [g]** | 37.215 | 3.306 | 38.048 | 10.105 | 1.878 | 4.446 | 5.002 | 0.5 |

**Table 8: Formulation for Sol-Gel F002***

| | **SILANE PRECURSORS** | | | **METAL COMPLEX** | | **1st Hydrolysis** | **2nd Hydrolysis** | **ADDITIVE** |
|---|---|---|---|---|---|---|---|---|
| **Final Concentration [mol. %]** | 96.5 | | | 3.5 | | N/A | N/A | N/A |
| | | | | *Metal* | *Chelate* | *Catalyst* | *DI Water* | |
| **Chemical** | **PhTEOS** | **TEOS** | **MAPTMS** | **ZPO** | **MAAH** | **HNO3 (0.1M)** | **H2O** | **Levasil 200** |
| **Component Concentration [mol. %]** | 47.8 | 4.9 | 47.3 | 100 | 100 | N/A | N/A | 0.25 -1.5% of Sol-Gel Weight |
| **Indv. Weight [g]** | 39.157 | 3.708 | 40.457 | 5.832 | 1.084 | 4.721 | 5.042 | 0.5 |

**Table 9: Formulation for Sol-Gel F002**

| | **SILANE PRECURSORS** | | | **METAL COMPLEX** | | **1st Hydrolysis** | **2nd Hydrolysis** | **ADDITIVE** |
|---|---|---|---|---|---|---|---|---|
| **Final Concentration [mol. %]** | 98.5 | | | 1.5 | | N/A | N/A | N/A |
| | | | | *Metal* | *Chelate* | *Catalyst* | *DI Water* | |
| **Chemical** | **PhTEOS** | **TEOS** | **MAPTMS** | **ZPO** | **MAAH** | **HNO3 (0.1M)** | **H2O** | **Levasil 200** |
| **Component Concentration [mol. %]** | 47.8 | 4.9 | 47.3 | 100 | 100 | N/A | N/A | 0.25 -1.5% of Sol-Gel Weight |
| **Indv. Weight [g]** | 41.200 | 3.661 | 42.123 | 2.555 | 0.475 | 4.923 | 5.063 | 0.5 |

**Table 10: Formulation for Sol-Gel F003**

| | **SILANE PRECURSORS** | | | **METAL COMPLEX** | | | **1st Hydrolysis** | **2nd Hydrolysis** |
|---|---|---|---|---|---|---|---|---|
| **Final Concentration [mol. %]** | 50 | | | 50 | | | N/A | N/A |
| | | | | *Metal* | *Metal* | *Chelate* | *Catalyst* | *DI Water* |
| **Chemical** | **PhTEOS** | **TEOS** | **MAPTMS** | **ZPO** | **TIOP** | **MAAH** | **HNO3 (0.1M)** | **H2O** |
| **Component Concentration [mol. %]** | 51.55 | 4.12 | 44.33 | 50 | 50 | 100 | N/A | N/A |
| **Indv. Weight [g]** | 17.418 | 1.207 | 15.475 | 32.889 | 19.976 | 6.112 | 1.925 | 4.999 |

**Table 11: Formulation for Sol-Gel F003**

| | **SILANE PRECURSORS** | | | **METAL COMPLEX** | | | **1st Hydrolysis** | **2nd Hydrolysis** |
|---|---|---|---|---|---|---|---|---|
| **Final Concentration [mol. %]** | 70 | | | 30 | | | N/A | N/A |
| | | | | *Metal* | *Metal* | *Chelate* | *Catalyst* | *DI Water* |
| **Chemical** | **PhTEOS** | **TEOS** | **MAPTMS** | **ZPO** | **TIOP** | **MAAH** | **HNO3 (0.1M)** | **H2O** |
| **Component Concentration [mol. %]** | 51.55 | 4.12 | 44.33 | 50 | 50 | 100 | N/A | N/A |
| **Indv. Weight [g]** | 26.986 | 1.869 | 23.977 | 21.839 | 13.264 | 4.058 | 2.982 | 5.023 |

**Table 12: Formulation for Sol-Gel F003**

| | **SILANE PRECURSORS** | | | **METAL COMPLEX** | | | **1st Hydrolysis** | **2nd Hydrolysis** |
|---|---|---|---|---|---|---|---|---|
| **Final Concentration [mol. %]** | 80 | | | 20 | | | N/A | N/A |
| | | | | *Metal* | *Metal* | *Chelate* | *Catalyst* | *DI Water* |
| **Chemical** | **PhTEOS** | **TEOS** | **MAPTMS** | **ZPO** | **TIOP** | **MAAH** | **HNO3 (0.1M)** | **H2O** |
| **Component Concentration [mol. %]** | 51.55 | 4.12 | 44.33 | 50 | 50 | 100 | N/A | N/A |
| **Indv. Weight [g]** | 32.580 | 2.257 | 28.947 | 15.380 | 9.341 | 2.858 | 3.600 | 5.038 |

**Table 13: Formulation for Sol-Gel F003**

| | **SILANE PRECURSORS** | | | **METAL COMPLEX** | | | **1st Hydrolysis** | **2nd Hydrolysis** |
|---|---|---|---|---|---|---|---|---|
| **Final Concentration [mol. %]** | 87 | | | 13 | | | N/A | N/A |
| | | | | *Metal* | *Metal* | *Chelate* | *Catalyst* | *DI Water* |
| **Chemical** | **PhTEOS** | **TEOS** | **MAPTMS** | **ZPO** | **TIOP** | **MAAH** | **HNO3 (0.1M)** | **H2O** |
| **Component Concentration [mol. %]** | 51.55 | 4.12 | 44.33 | 50 | 50 | 100 | N/A | N/A |
| **Indv. Weight [g]** | 36.885 | 2.555 | 32.772 | 10.407 | 6.321 | 1.934 | 4.076 | 5.049 |

**Table 14: Formulation for Sol-Gel F003**

| | **SILANE PRECURSORS** | | | **METAL COMPLEX** | | | **1st Hydrolysis** | **2nd Hydrolysis** |
|---|---|---|---|---|---|---|---|---|
| **Final Concentration [mol. %]** | 91 | | | 9 | | | N/A | N/A |
| | | | | *Metal* | *Metal* | *Chelate* | *Catalyst* | *DI Water* |
| **Chemical** | **PhTEOS** | **TEOS** | **MAPTMS** | **ZPO** | **TIOP** | **MAAH** | **HNO3 (0.1M)** | **H2O** |
| **Component Concentration [mol. %]** | 51.55 | 4.12 | 44.33 | 50 | 50 | 100 | N/A | N/A |
| **Indv. Weight [g]** | 39.508 | 2.737 | 35.103 | 7.378 | 4.481 | 1.371 | 4.366 | 5.056 |

**Table 15: Formulation for Sol-Gel F003**

| | **SILANE PRECURSORS** | | | **METAL COMPLEX** | | | **1st Hydrolysis** | **2nd Hydrolysis** |
|---|---|---|---|---|---|---|---|---|
| **Final Concentration [mol. %]** | 94 | | | 6 | | | N/A | N/A |
| | | | | *Metal* | *Metal* | *Chelate* | *Catalyst* | *DI Water* |
| **Chemical** | **PhTEOS** | **TEOS** | **MAPTMS** | **ZPO** | **TIOP** | **MAAH** | **HNO3 (0.1M)** | **H2O** |
| **Component Concentration [mol. %]** | 51.55 | 4.12 | 44.33 | 50 | 50 | 100 | N/A | N/A |
| **Indv. Weight [g]** | 41.560 | 2.879 | 36.926 | 5.009 | 3.042 | 0.931 | 4.593 | 5.061 |

**Table 16: Formulation for Sol-Gel F003***

| | **SILANE PRECURSORS** | | | **METAL COMPLEX** | | | **1st Hydrolysis** | **2nd Hydrolysis** |
|---|---|---|---|---|---|---|---|---|
| **Final Concentration [mol. %]** | 97 | | | 3 | | | N/A | N/A |
| | | | | *Metal* | *Metal* | *Chelate* | *Catalyst* | *DI Water* |
| **Chemical** | **PhTEOS** | **TEOS** | **MAPTMS** | **ZPO** | **TIOP** | **MAAH** | **HNO3 (0.1M)** | **H2O** |
| **Component Concentration [mol. %]** | 51.55 | 4.12 | 44.33 | 50 | 50 | 100 | N/A | N/A |
| **Indv. Weight [g]** | 43.688 | 3.026 | 38.816 | 2.551 | 1.550 | 0.474 | 4.828 | 5.066 |

**Table 17: Formulation for Sol-Gel F003**

| | **SILANE PRECURSORS** | | | **METAL COMPLEX** | | | **1st Hydrolysis** | **2nd Hydrolysis** |
|---|---|---|---|---|---|---|---|---|
| **Final Concentration [mol. %]** | 99 | | | 1 | | | N/A | N/A |
| | | | | *Metal* | *Metal* | *Chelate* | *Catalyst* | *DI Water* |
| **Chemical** | **PhTEOS** | **TEOS** | **MAPTMS** | **ZPO** | **TIOP** | **MAAH** | **HNO3 (0.1M)** | **H2O** |
| **Component Concentration [mol. %]** | 51.55 | 4.12 | 44.33 | 50 | 50 | 100 | N/A | N/A |
| **Indv. Weight [g]** | 45.152 | 3.128 | 40.117 | 0.861 | 0.523 | 0.160 | 4.990 | 5.070 |

**Table 18: Formulation for Sol-Gel F004**

| | **SILANE PRECURSORS** | | **METAL COMPLEX** | | **1st Hydrolysis** | **2nd Hydrolysis** |
|---|---|---|---|---|---|---|
| **Final Concentration [mol. %]** | 50 | | 50 | | N/A | N/A |
| | | | *Metal* | *Chelate* | *Catalyst* | *DI Water* |
| **Chemical** | **MAPTMS** | **TEOS** | **ZPO** | **MAAH** | **HNO3 (0.1M)** | **H2O** |
| **Component Concentration [mol. %]** | 99.375 | 0.625 | 100 | 100 | N/A | N/A |
| **Indv. Weight [g]** | 28.838 | 0.152 | 54.680 | 10.161 | 1.582 | 4.588 |

**Table 19: Formulation for Sol-Gel F004**

| | **SILANE PRECURSORS** | | **METAL COMPLEX** | | **1st Hydrolysis** | **2nd Hydrolysis** |
|---|---|---|---|---|---|---|
| **Final Concentration [mol. %]** | 70 | | 30 | | N/A | N/A |
| | | | *Metal* | *Chelate* | *Catalyst* | *DI Water* |
| **Chemical** | **MAPTMS** | **TEOS** | **ZPO** | **MAAH** | **HNO3 (0.1M)** | **H2O** |
| **Component Concentration [mol. %]** | 99.375 | 0.625 | 100 | 100 | N/A | N/A |
| **Indv. Weight [g]** | 47.097 | 0.248 | 38.272 | 7.112 | 2.583 | 4.687 |

**Table 20: Formulation for Sol-Gel F004***

| | **SILANE PRECURSORS** | | **METAL COMPLEX** | | **1st Hydrolysis** | **2nd Hydrolysis** |
|---|---|---|---|---|---|---|
| **Final Concentration [mol. %]** | 80 | | 20 | | N/A | N/A |
| | | | *Metal* | *Chelate* | *Catalyst* | *DI Water* |
| **Chemical** | **MAPTMS** | **TEOS** | **ZPO** | **MAAH** | **HNO3 (0.1M)** | **H2O** |
| **Component Concentration [mol. %]** | 99.375 | 0.625 | 100 | 100 | N/A | N/A |
| **Indv. Weight [g]** | 58.715 | 0.310 | 27.833 | 5.172 | 3.220 | 4.750 |

**Table 21: Formulation for Sol-Gel F004**

| | **SILANE PRECURSORS** | | **METAL COMPLEX** | | **1st Hydrolysis** | **2nd Hydrolysis** |
|---|---|---|---|---|---|---|
| **Final Concentration [mol. %]** | 85 | | 15 | | N/A | N/A |
| | | | *Metal* | *Chelate* | *Catalyst* | *DI Water* |
| **Chemical** | **MAPTMS** | **TEOS** | **ZPO** | **MAAH** | **HNO3 (0.1M)** | **H2O** |
| **Component Concentration [mol. %]** | 99.375 | 0.625 | 100 | 100 | N/A | N/A |
| **Indv. Weight [g]** | 65.353 | 0.345 | 21.868 | 4.064 | 3.584 | 4.787 |

**Table 22: Formulation for Sol-Gel F004**

| | **SILANE PRECURSORS** | | **METAL COMPLEX** | | **1st Hydrolysis** | **2nd Hydrolysis** |
|---|---|---|---|---|---|---|
| **Final Concentration [mol. %]** | 90 | | 10 | | N/A | N/A |
| | | | *Metal* | *Chelate* | *Catalyst* | *DI Water* |
| **Chemical** | **MAPTMS** | **TEOS** | **ZPO** | **MAAH** | **HNO3 (0.1M)** | **H2O** |
| **Component Concentration [mol. %]** | 99.375 | 0.625 | 100 | 100 | N/A | N/A |
| **Indv. Weight [g]** | 72.654 | 0.383 | 15.307 | 2.844 | 3.985 | 4.826 |

**Table 23: Formulation for Sol-Gel F004**

| | **SILANE PRECURSORS** | | **METAL COMPLEX** | | **1st Hydrolysis** | **2nd Hydrolysis** |
|---|---|---|---|---|---|---|
| **Final Concentration [mol. %]** | 94 | | 6 | | N/A | N/A |
| | | | *Metal* | *Chelate* | *Catalyst* | *DI Water* |
| **Chemical** | **MAPTMS** | **TEOS** | **ZPO** | **MAAH** | **HNO3 (0.1M)** | **H2O** |
| **Component Concentration [mol. %]** | 99.375 | 0.625 | 100 | 100 | N/A | N/A |
| **Indv. Weight [g]** | 79.043 | 0.417 | 9.566 | 1.778 | 4.335 | 4.861 |

**Table 24: Formulation for Sol-Gel F004**

| | **SILANE PRECURSORS** | | **METAL COMPLEX** | | **1st Hydrolysis** | **2nd Hydrolysis** |
|---|---|---|---|---|---|---|
| **Final Concentration [mol. %]** | 96 | | 4 | | N/A | N/A |
| | | | *Metal* | *Chelate* | *Catalyst* | *DI Water* |
| **Chemical** | **MAPTMS** | **TEOS** | **ZPO** | **MAAH** | **HNO3 (0.1M)** | **H2O** |
| **Component Concentration [mol. %]** | 99.375 | 0.625 | 100 | 100 | N/A | N/A |
| **Indv. Weight [g]** | 82.441 | 0.435 | 6.513 | 1.210 | 4.521 | 4.880 |

**Table 25: Formulation for Sol-Gel F004**

| | **SILANE PRECURSORS** | | **METAL COMPLEX** | | **1st Hydrolysis** | **2nd Hydrolysis** |
|---|---|---|---|---|---|---|
| **Final Concentration [mol. %]** | 98 | | 2 | | N/A | N/A |
| | | | *Metal* | *Chelate* | *Catalyst* | *DI Water* |
| **Chemical** | **MAPTMS** | **TEOS** | **ZPO** | **MAAH** | **HNO3 (0.1M)** | **H2O** |
| **Component Concentration [mol. %]** | 99.375 | 0.625 | 100 | 100 | N/A | N/A |
| **Indv. Weight [g]** | 85.986 | 0.454 | 3.327 | 0.618 | 4.716 | 4.899 |

**Table 26: Formulation for Sol-Gel F005**

| | **SILANE PRECURSOR** | **METAL COMPLEX** | | **1st Hydrolysis** | **2nd Hydrolysis** | **SOLVENT** | **ADDITIVE** |
|---|---|---|---|---|---|---|---|
| **Final Concentration [mol. %]** | 50 | 50 | | N/A | N/A | N/A | N/A |
| | | *Metal* | *Metal* | *Catalyst* | *DI Water* | | |
| **Chemical** | **MAPTMS** | **ZPO** | **APTES** | **HNO3 (0.1M)** | **H2O** | **EtOH** | **BTSPA** |
| **Component Concentration [mol. %]** | 100 | 50 | 50 | N/A | N/A | 0 - 25% w/w of Sol-Gel | 0.5 - 10% w/w of Sol-Gel |
| **Indv. Weight [g]** | 37.671 | 35.491 | 16.789 | 2.049 | 8 | 11.111 | 5 |

**Table 27: Formulation for Sol-Gel F005**

| | **SILANE PRECURSOR** | **METAL COMPLEX** | | **1st Hydrolysis** | **2nd Hydrolysis** | **SOLVENT** | **ADDITIVE** |
|---|---|---|---|---|---|---|---|
| **Final Concentration [mol. %]** | 70 | 30 | | N/A | N/A | N/A | N/A |
| | | *Metal* | *Metal* | *Catalyst* | *DI Water* | | |
| **Chemical** | **MAPTMS** | **ZPO** | **APTES** | **HNO3 (0.1M)** | **H2O** | **EtOH** | **BTSPA** |
| **Component Concentration [mol. %]** | 100 | 50 | 50 | N/A | N/A | 0 - 25% w/w of Sol-Gel | 0.5 - 10% w/w of Sol-Gel |
| **Indv. Weight [g]** | 56.457 | 22.796 | 10.784 | 3.071 | 6.893 | 11.111 | 5 |

**Table 28: Formulation for Sol-Gel F005***

| | **SILANE PRECURSOR** | **METAL COMPLEX** | | **1st Hydrolysis** | **2nd Hydrolysis** | **SOLVENT** | **ADDITIVE** |
|---|---|---|---|---|---|---|---|
| **Final Concentration [mol. %]** | 80 | 20 | | N/A | N/A | N/A | N/A |
| | | *Metal* | *Metal* | *Catalyst* | *DI Water* | | |
| **Chemical** | **MAPTMS** | **ZPO** | **APTES** | **HNO3 (0.1M)** | **H2O** | **EtOH** | **BTSPA** |
| **Component Concentration [mol. %]** | 100 | 50 | 50 | N/A | N/A | 0 - 25% w/w of Sol-Gel | 0.5 - 10% w/w of Sol-Gel |
| **Indv. Weight [g]** | 66.879 | 15.752 | 7.452 | 3.638 | 6.279 | 11.111 | 5 |

**Table 29: Formulation for Sol-Gel F005**

| | **SILANE PRECURSOR** | **METAL COMPLEX** | | **1st Hydrolysis** | **2nd Hydrolysis** | **SOLVENT** | **ADDITIVE** |
|---|---|---|---|---|---|---|---|
| **Final Concentration [mol. %]** | 90 | 10 | | N/A | N/A | N/A | N/A |
| | | *Metal* | *Metal* | *Catalyst* | *DI Water* | | |
| **Chemical** | **MAPTMS** | **ZPO** | **APTES** | **HNO3 (0.1M)** | **H2O** | **EtOH** | **BTSPA** |
| **Component Concentration [mol. %]** | 100 | 50 | 50 | N/A | N/A | 0 - 25% w/w of Sol-Gel | 0.5 - 10% w/w of Sol-Gel |
| **Indv. Weight [g]** | 78.092 | 8.175 | 3.867 | 4.247 | 5.618 | 11.111 | 5 |

**Table 30: Formulation for Sol-Gel F005**

| | **SILANE PRECURSOR** | **METAL COMPLEX** | | **1st Hydrolysis** | **2nd Hydrolysis** | **SOLVENT** | **ADDITIVE** |
|---|---|---|---|---|---|---|---|
| **Final Concentration [mol. %]** | 92 | 8 | | N/A | N/A | N/A | N/A |
| | | *Metal* | *Metal* | *Catalyst* | *DI Water* | | |
| **Chemical** | **MAPTMS** | **ZPO** | **APTES** | **HNO3 (0.1M)** | **H2O** | **EtOH** | **BTSPA** |
| **Component Concentration [mol. %]** | 100 | 50 | 50 | N/A | N/A | 0 - 25% w/w of Sol-Gel | 0.5 - 10% w/w of Sol-Gel |
| **Indv. Weight [g]** | 80.438 | 6.59 | 3.117 | 4.375 | 5.48 | 11.111 | 5 |

**Table 31: Formulation for Sol-Gel F005**

| | **SILANE PRECURSOR** | **METAL COMPLEX** | | **1st Hydrolysis** | **2nd Hydrolysis** | **SOLVENT** | **ADDITIVE** |
|---|---|---|---|---|---|---|---|
| **Final Concentration [mol. %]** | 94 | 6 | | N/A | N/A | N/A | N/A |
| | | *Metal* | *Metal* | *Catalyst* | *DI Water* | | |
| **Chemical** | **MAPTMS** | **ZPO** | **APTES** | **HNO3 (0.1M)** | **H2O** | **EtOH** | **BTSPA** |
| **Component Concentration [mol. %]** | 100 | 50 | 50 | N/A | N/A | 0 - 25% w/w of Sol-Gel | 0.5 - 10% w/w of Sol-Gel |
| **Indv. Weight [g]** | 82.819 | 4.98 | 2.356 | 4.504 | 5.34 | 11.111 | 5 |

**Table 32: Formulation for Sol-Gel F005**

| | **SILANE PRECURSOR** | **METAL COMPLEX** | | **1st Hydrolysis** | **2nd Hydrolysis** | **SOLVENT** | **ADDITIVE** |
|---|---|---|---|---|---|---|---|
| **Final Concentration [mol. %]** | 97 | 3 | | N/A | N/A | N/A | N/A |
| | | *Metal* | *Metal* | *Catalyst* | *DI Water* | | |
| **Chemical** | **MAPTMS** | **ZPO** | **APTES** | **HNO3 (0.1M)** | **H2O** | **EtOH** | **BTSPA** |
| **Component Concentration [mol. %]** | 100 | 50 | 50 | N/A | N/A | 0 - 25% w/w of Sol-Gel | 0.5 - 10% w/w of Sol-Gel |
| **Indv. Weight [g]** | 86.461 | 2.519 | 1.192 | 4.703 | 5.125 | 11.111 | 5 |

**Table 33: Formulation for Sol-Gel F005**

| | **SILANE PRECURSOR** | **METAL COMPLEX** | | **1st Hydrolysis** | **2nd Hydrolysis** | **SOLVENT** | **ADDITIVE** |
|---|---|---|---|---|---|---|---|
| **Final Concentration [mol. %]** | 99 | 1 | | N/A | N/A | N/A | N/A |
| | | *Metal* | *Metal* | *Catalyst* | *DI Water* | | |
| **Chemical** | **MAPTMS** | **ZPO** | **APTES** | **HNO3 (0.1M)** | **H2O** | **EtOH** | **BTSPA** |
| **Component Concentration [mol. %]** | 100 | 50 | 50 | N/A | N/A | 0 - 25% w/w of Sol-Gel | 0.5 - 10% w/w of Sol-Gel |
| **Indv. Weight [g]** | 88.937 | 0.846 | 0.4 | 4.837 | 4.979 | 11.111 | 5 |

**Table 34: Formulation for Sol-Gel F006**

| | **SILANE PRECURSOR** | **METAL COMPLEX** | | **1st Hydrolysis** | **2nd Hydrolysis** | **SOLVENT** | **ADDITIVES** | |
|---|---|---|---|---|---|---|---|---|
| **Final Concentration [mol. %]** | 53 | 47 | | N/A | N/A | N/A | N/A | N/A |
| | | *Metal* | *Metal* | *Catalyst* | *DI Water* | | | |
| **Chemical** | **MAPTMS** | **ZPO** | **MAAH** | **HNO3 (0.1M)** | **H2O** | **EtOH** | **BTSPA** | **BTA** |
| **Component Concentration [mol. %]** | 100 | 100 | 100 | N/A | N/A | 5 - 25% w/w of Sol-Gel | 0.5 - 10% w/w of Sol-Gel | 0.2 -1.5% w/w of Sol-Gel |
| **Indv. Weight [g]** | 45.633 | 38.126 | 7.085 | 2.482 | 6.674 | 25 | 2.5 | 0.5 |

**Table 35: Formulation for Sol-Gel F006**

| | **SILANE PRECURSOR** | **METAL COMPLEX** | | **1st Hydrolysis** | **2nd Hydrolysis** | **SOLVENT** | **ADDITIVES** | |
|---|---|---|---|---|---|---|---|---|
| **Final Concentration [mol. %]** | 61 | 39 | | N/A | N/A | N/A | N/A | N/A |
| | | *Metal* | *Metal* | *Catalyst* | *DI Water* | | | |
| **Chemical** | **MAPTMS** | **ZPO** | **MAAH** | **HNO3 (0.1M)** | **H2O** | **EtOH** | **BTSPA** | **BTA** |
| **Component Concentration [mol. %]** | 100 | 100 | 100 | N/A | N/A | 5 - 25% w/w of Sol-Gel | 0.5 - 10% w/w of Sol-Gel | 0.2 -1.5% w/w of Sol-Gel |
| **Indv. Weight [g]** | 52.930 | 31.882 | 5.925 | 2.879 | 6.385 | 25 | 2.5 | 0.5 |

**Table 36: Formulation for Sol-Gel F006***

| | **SILANE PRECURSOR** | **METAL COMPLEX** | | **1st Hydrolysis** | **2nd Hydrolysis** | **SOLVENT** | **ADDITIVES** | |
|---|---|---|---|---|---|---|---|---|
| **Final Concentration [mol. %]** | 67 | 33 | | N/A | N/A | N/A | N/A | N/A |
| | | *Metal* | *Metal* | *Catalyst* | *DI Water* | | | |
| **Chemical** | **MAPTMS** | **ZPO** | **MAAH** | **HNO3 (0.1M)** | **H2O** | **EtOH** | **BTSPA** | **BTA** |
| **Component Concentration [mol. %]** | 100 | 100 | 100 | N/A | N/A | 5 - 25% w/w of Sol-Gel | 0.5 - 10% w/w of Sol-Gel | 0.2 -1.5% w/w of Sol-Gel |
| **Indv. Weight [g]** | 58.477 | 27.135 | 5.043 | 3.181 | 6.164 | 25 | 2.5 | 0.5 |

**Table 37: Formulation for Sol-Gel F006**

| | **SILANE PRECURSOR** | **METAL COMPLEX** | | **1st Hydrolysis** | **2nd Hydrolysis** | **SOLVENT** | **ADDITIVES** | |
|---|---|---|---|---|---|---|---|---|
| **Final Concentration [mol. %]** | 74 | 26 | | N/A | N/A | N/A | N/A | N/A |
| | | *Metal* | *Metal* | *Catalyst* | *DI Water* | | | |
| **Chemical** | **MAPTMS** | **ZPO** | **MAAH** | **HNO3 (0.1M)** | **H2O** | **EtOH** | **BTSPA** | **BTA** |
| **Component Concentration [mol. %]** | 100 | 100 | 100 | N/A | N/A | 5 - 25% w/w of Sol-Gel | 0.5 - 10% w/w of Sol-Gel | 0.2 -1.5% w/w of Sol-Gel |
| **Indv. Weight [g]** | 65.032 | 21.527 | 4 | 3.537 | 5.904 | 25 | 2.5 | 0.5 |

**Table 38: Formulation for Sol-Gel F006**

| | **SILANE PRECURSOR** | **METAL COMPLEX** | | **1st Hydrolysis** | **2nd Hydrolysis** | **SOLVENT** | **ADDITIVES** | |
|---|---|---|---|---|---|---|---|---|
| **Final Concentration [mol. %]** | 80 | 20 | | N/A | N/A | N/A | N/A | N/A |
| | | *Metal* | *Metal* | *Catalyst* | *DI Water* | | | |
| **Chemical** | **MAPTMS** | **ZPO** | **MAAH** | **HNO3 (0.1M)** | **H2O** | **EtOH** | **BTSPA** | **BTA** |
| **Component Concentration [mol. %]** | 100 | 100 | 100 | N/A | N/A | 5 - 25% w/w of Sol-Gel | 0.5 - 10% w/w of Sol-Gel | 0.2 -1.5% w/w of Sol-Gel |
| **Indv. Weight [g]** | 70.722 | 16.657 | 3.095 | 3.847 | 5.678 | 25 | 2.5 | 0.5 |

**Table 39: Formulation for Sol-Gel F006**

| | **SILANE PRECURSOR** | **METAL COMPLEX** | | **1st Hydrolysis** | **2nd Hydrolysis** | **SOLVENT** | **ADDITIVES** | |
|---|---|---|---|---|---|---|---|---|
| **Final Concentration [mol. %]** | 87 | 13 | | N/A | N/A | N/A | N/A | N/A |
| | | *Metal* | *Metal* | *Catalyst* | *DI Water* | | | |
| **Chemical** | **MAPTMS** | **ZPO** | **MAAH** | **HNO3 (0.1M)** | **H2O** | **EtOH** | **BTSPA** | **BTA** |
| **Component Concentration [mol. %]** | 100 | 100 | 100 | N/A | N/A | 5 - 25% w/w of Sol-Gel | 0.5 - 10% w/w of Sol-Gel | 0.2 -1.5% w/w of Sol-Gel |
| **Indv. Weight [g]** | 77.448 | 10.903 | 2.026 | 4.212 | 5.411 | 25 | 2.5 | 0.5 |

**Table 40: Formulation for Sol-Gel F006**

| | **SILANE PRECURSOR** | **METAL COMPLEX** | | **1st Hydrolysis** | **2nd Hydrolysis** | **SOLVENT** | **ADDITIVES** | |
|---|---|---|---|---|---|---|---|---|
| **Final Concentration [mol. %]** | 91 | 9 | | N/A | N/A | N/A | N/A | N/A |
| | | *Metal* | *Metal* | *Catalyst* | *DI Water* | | | |
| **Chemical** | **MAPTMS** | **ZPO** | **MAAH** | **HNO3 (0.1M)** | **H2O** | **EtOH** | **BTSPA** | **BTA** |
| **Component Concentration [mol. %]** | 100 | 100 | 100 | N/A | N/A | 5 - 25% w/w of Sol-Gel | 0.5 - 10% w/w of Sol-Gel | 0.2 -1.5% w/w of Sol-Gel |
| **Indv. Weight [g]** | 81.333 | 7.578 | 1.408 | 4.424 | 5.257 | 25 | 2.5 | 0.5 |

**Table 41: Formulation for Sol-Gel F006**

| | **SILANE PRECURSOR** | **METAL COMPLEX** | | **1st Hydrolysis** | **2nd Hydrolysis** | **SOLVENT** | **ADDITIVES** | |
|---|---|---|---|---|---|---|---|---|
| **Final Concentration [mol. %]** | 97 | 3 | | N/A | N/A | N/A | N/A | N/A |
| | | *Metal* | *Metal* | *Catalyst* | *DI Water* | | | |
| **Chemical** | **MAPTMS** | **ZPO** | **MAAH** | **HNO3 (0.1M)** | **H2O** | **EtOH** | **BTSPA** | **BTA** |
| **Component Concentration [mol. %]** | 100 | 100 | 100 | N/A | N/A | 5 - 25% w/w of Sol-Gel | 0.5 - 10% w/w of Sol-Gel | 0.2 -1.5% w/w of Sol-Gel |
| **Indv. Weight [g]** | 87.219 | 2.541 | 0.472 | 4.744 | 5.023 | 25 | 2.5 | 0.5 |

### Testing of formulations F001 - F005 on metal substrates (F001-F004 are not according to the inversion)

Several metal substrates (mostly aluminium "A" and mild steel "R" and R-ICF" substrates) were used for the purposes of testing the sol-gel formulations F001 - F005. They were procured from Q-Lab & Amari. Table 41 outlines the metal substrates type and surface finish from Q-Lab. The Q-panels prepared with an iron phosphate pre-treatment were used and dip-coated as-is. However, the bare aluminium, 'A', and mild steel, 'R', were degreased with a 0.5M solution of sodium hydroxide (NaOH) in deionised water and then rinsed with deionised water followed by isopropyl alcohol (IPA). The panels were then dried with hot air prior to dip coating.

Grade 2024T3 aluminium alloy panels (cut to size 6" x 3" x 1.5mm thick) were procured from Amari. This substrate was used for anodising with sol-gel as a sealer. Prior to sol-gel coating, the panels were anodised in sulphuric acid. As part of the anodising process, the aluminium alloy was cleaned in an alkaline degreaser (Socomore A3432) as well as de-oxidized (Socomore A1859/A1806) before anodising. After anodising, the panels were soaked in IPA for a few minutes to drive off any water entrapped in the anodic layer. A final hot air blow dry then removed the IPA solvent. At this stage, the panels were dip-coated in the sol-gel. The anodised panels were allowed to dwell in the sol-gel for 2.5min to allow the sol-gel to permeate into the anodic layer.

**Table 42: Metal substrates procured from Q-Lab.**

| **Q-Lab Product Code** | **Description** |
|---|---|
| A | Bare Aluminium 3003H14 |
| R | 1008/1010 Grade Steel with dull matte mill finish |
| R-ICF | As per 'R' with an Iron Phosphate conversion coating |

### Experimental Methods and Sample Testing

The following experimental methods were used in the testing of formulations [F001] - [F005] and prepared samples. Where applicable, the test standard is referenced.

### Viscosity

Viscosity of the sol-gel was measured using an AND SV-10 Viscometer. The system can be seen in Figure 7. Samples of approximately 35-to-45ml of sol-gel were placed in the containers. Once the system was started, it was allowed to run for approximately 20s to reach a steady state. After this point, viscosity measurements were taken every 10s until five readings were obtained. The viscosity values presented herein are the average of these five readings.

### Thermogravimetric Analysis (TGA)

TGA was used to give an insight into the cure behaviour of the different sol-gel formulations. Tests were performed on a Shimadzu DTG 60M TGA. Two different TGA heating profiles were used. The first was a dynamic scan from 25°C to 250°C at a rate of 5°C/min. This was performed on the liquid sol-gel as well as pre-cured samples. The second was a simulated cure cycle that replicated the cure profile of dip coated parts cured in a conventional oven. In this case, the sol-gel was heated at a rate of 10°C/min up to the cure temperature (typically between 100°C and 160°C, depending on the formulation) and then held for 60mins. In all cases, the liquid sol-gel sample was approximately 20-30mg in weight.

### Pendulum Damping Testing

The pendulum damping test was carried out in accordance with ISO 1522-2006. A König pendulum test was used to give an indication of the hardness of each of the sol-gel coatings. The softer the coating, the quicker the pendulums oscillation will dampen (i.e. lower number of swings).

### Pencil Hardness Testing

Pencil hardness testing was conducted in accordance with ISO 15184-2012 (Determination of film hardness by pencil test). This particular test is a common industry method to rank the relative hardness of different coatings.

### Water Contact Angle

The water contact angle (WCA) was determined using a First Ten Angstrom (FTA) system. Five drops of deionised water were used per coated sample. The WCA values presented in this report are the average of the five measurements. A lower contact angle (< 90°) would be an indication of a hydrophilic coating that may be suitable for subsequent painting or adhesive bonding. A higher contact angle (> 90°) would indicate a hydrophobic coating that may be suitable for self-cleaning solutions.

### Dip-Coating

Samples were dip coated using a Bungard RDC 21-K system. Q-panel samples were held in place using alligator clamps and immersed into a bath containing the sol-gel at a constant speed. The panels were held in the sol-gel for up to 20 seconds (longer for anodised panels) and then withdrawn at a constant speed. The withdrawal speed was varied to control the final coating thickness and was typically in the range of 50 mm/min for thin coatings (< 5µm) to 500 mm/min for thicker coatings (10-to-20µm).

### Curing

After dip coating, the samples were cured in an air-circulated oven at the required temperature. The temperature varied depending on the sol-gel formulation. F001-to-F003 & F005 were typically cured at 140°C for 1hr while F004 was cured at 120°C for 2hrs.

### Neutral Salt Spray

Accelerated corrosion tests were performed in a neutral salt spray (NSS). The NSS chamber was maintained in accordance with ISO 9227:2017. Dip-coated and cured samples were sealed on one face with packing tape. The back and edges were further sealed with electrical insulation tape. This was to ensure that only the front face of the samples were exposed to the corrosion environment. For this report, samples were monitored over time up to a maximum of 672hrs (4 weeks).

### Viscosity Results

The viscosity of the sol-gel can have a significant effect on the resulting coating thickness after dip coating. The study was split between formulations F001-to-F004 and then F005 separately. This was because the effect of BTSPA concentration was also considered as part of the dilution study.

Formulations F001-to-F004 were prepared at three different dilutions of ethanol (EtOH). These were 0%, 10% & 25% wt. EtOH. The addition of a solvent can help to decrease the viscosity as well as extend the shelve life of the sol-gel. The viscosity was monitored up to 84 days (12 weeks) after synthesis. Formulations F001-to-F004 exhibited a general increase in viscosity over time at each dilution. The formulations with the highest molar concentration of the metal complex (i.e. F001 & F004) appear to start with highest viscosity and also increase the fastest over time. When diluted with 25% wt. EtOH, all sol-gels remain relatively stable over time, maintaining a viscosity of approximately between 20 & 40 mPa.s.

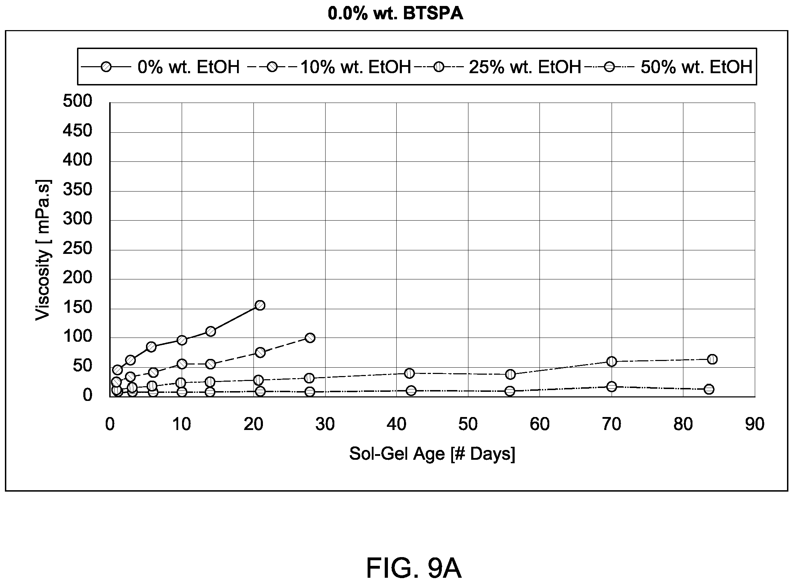

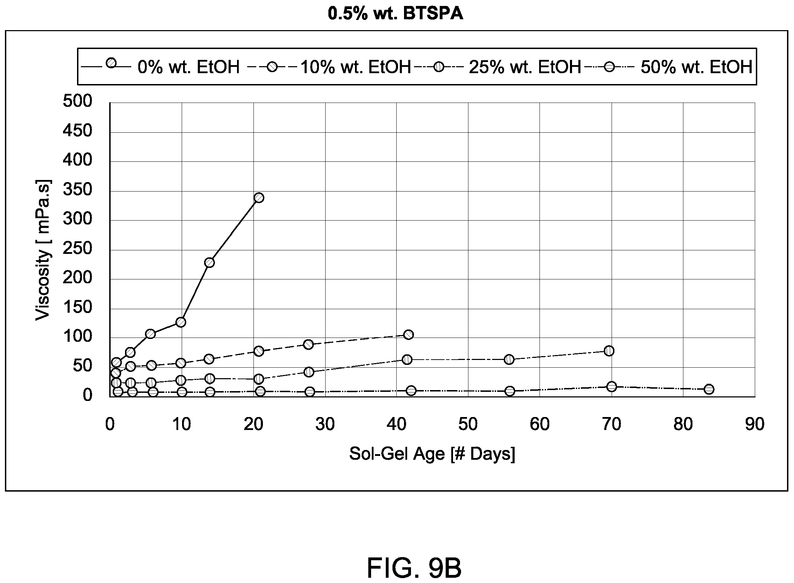

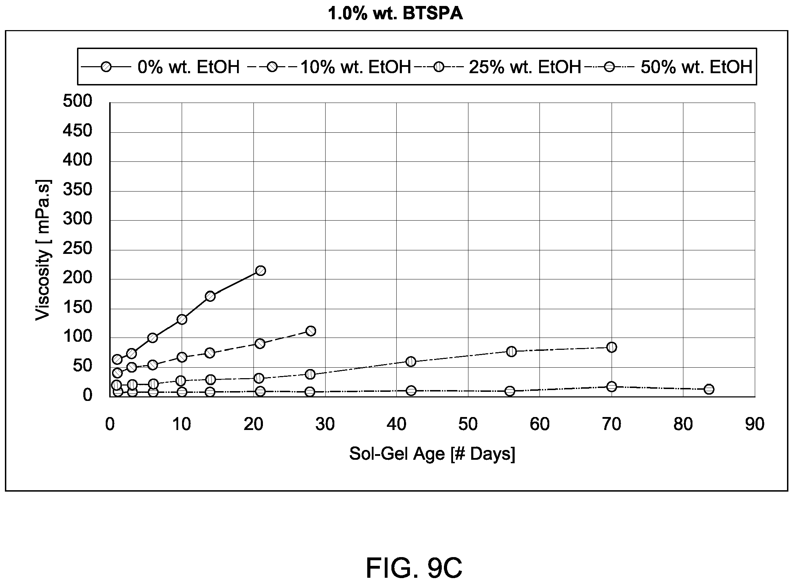

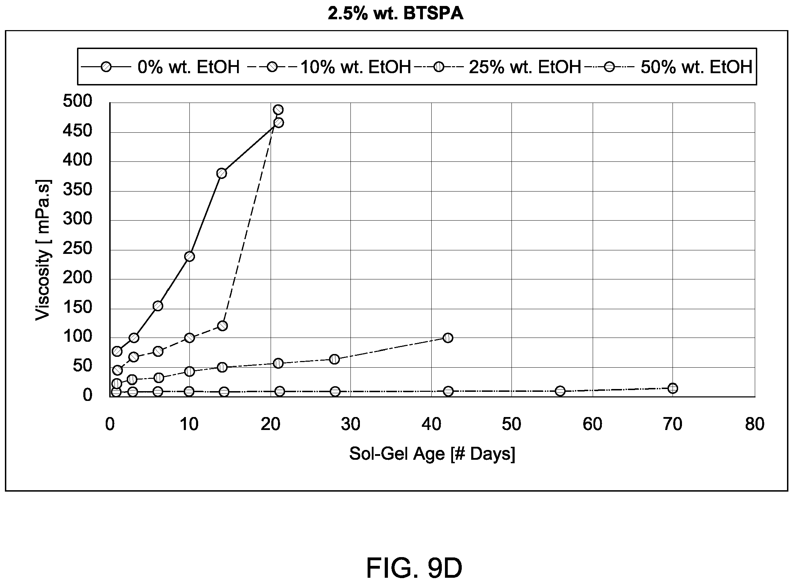

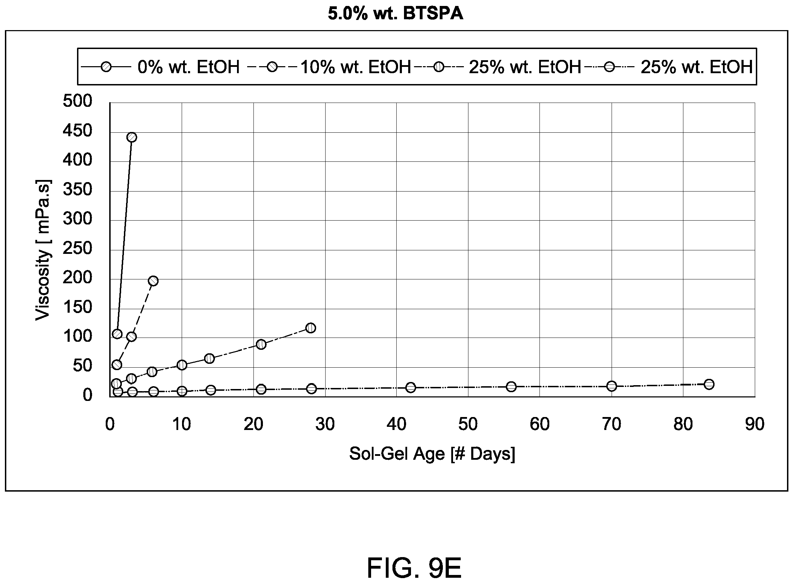

Formulation F005 was diluted with four different levels of ethanol. These were 0, 10, 25 & 50% wt. EtOH. The level of BTSPA was also considered at five different concentrations. These were 0.0, 0.5, 1.0, 2.5 & 5.0% wt. BTSPA. The viscosity was monitored up to a period of 84 days (12 weeks) or until the viscosity reached approximately 100 mPa.s. At this viscosity level, the sol-gel was deemed to have expired. Figure 9 shows viscosity versus sol-gel age at the different levels of dilution with EtOH and concentration of BTSPA. As observed with F001-to-F004, the level of ethanol was found to decrease the viscosity of the sol-gel and increase the shelf life (i.e. prevent rapid increases in viscosity over time). A dilution of 25 or 50% EtOH produced a relatively stable sol-gel over time. The concentration of BTSPA had a significant on the viscosity of the sol-gel. At high concentrations of BTSPA and low levels of dilution with EtOH, the viscosity increased rapidly over time.

### Thermogravimetric Analysis (TGA)

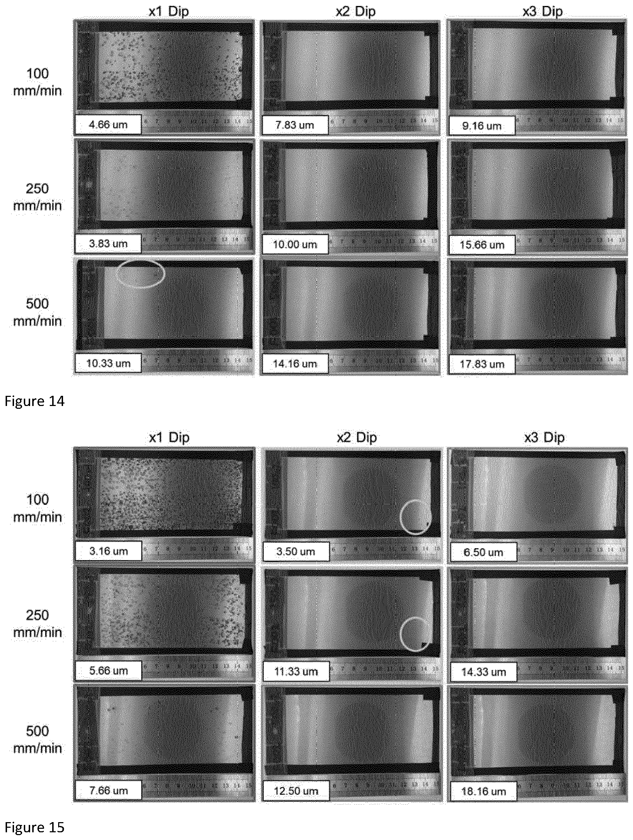

TGA experiments were performed on liquid sol-gel samples to determine the cure behaviour at different cure temperatures ranging from 100°C to 160°C. A simulated cure cycle (SCC) was programmed into the TGA that included a ramp of 10°C /min up to the cure temperature (i.e. 100, 120, 140 or 160°C) followed by a hold (or dwell) at the cure temperature for 60mins. For this series of tests, the sol-gels were un-diluted. Figure 14 shows the weight loss traces for each of the four formulations at different cure temperatures. It is particularly noticeable that a cure cycle of 100°C or 120°C for 60min is insufficient to achieve full cure of formulations F001, F002 & F003. This can be seen by the weight loss not reaching the same level as the sol-gels cured at 160°C for 60mins. If a longer cure time was employed, the same weight loss may have been achieved. However, this would likely require an excessively long cure time.

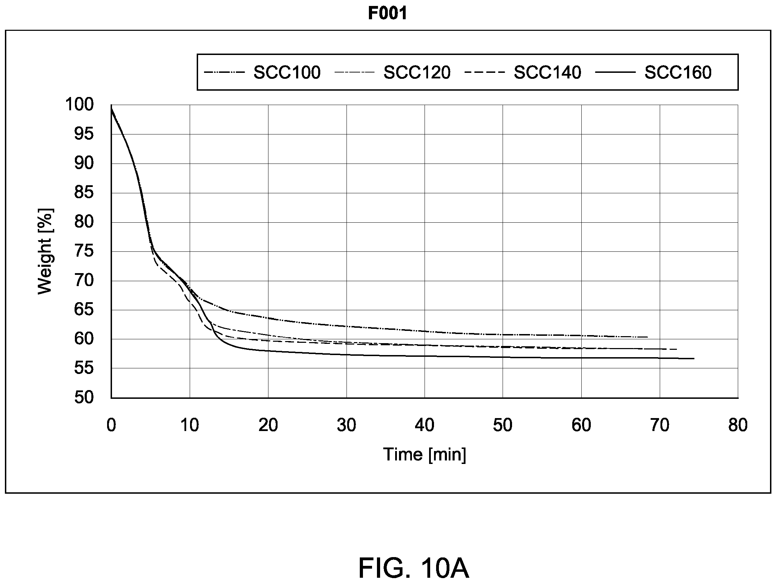

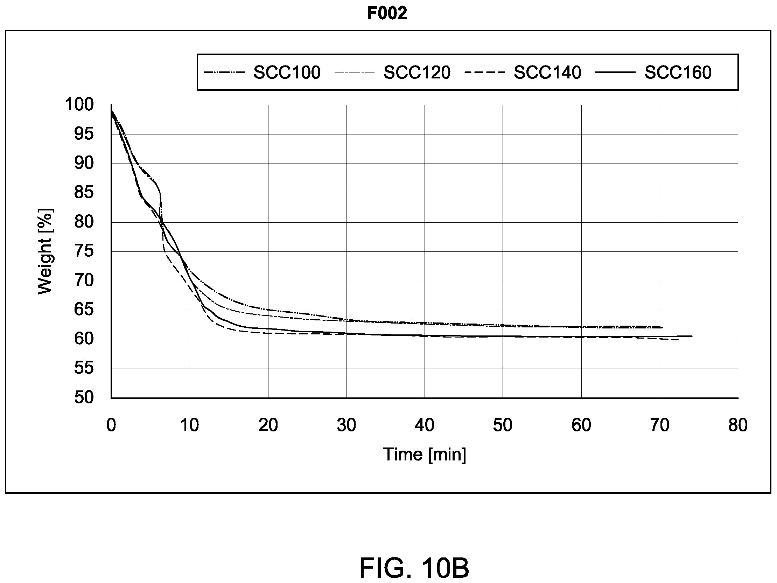

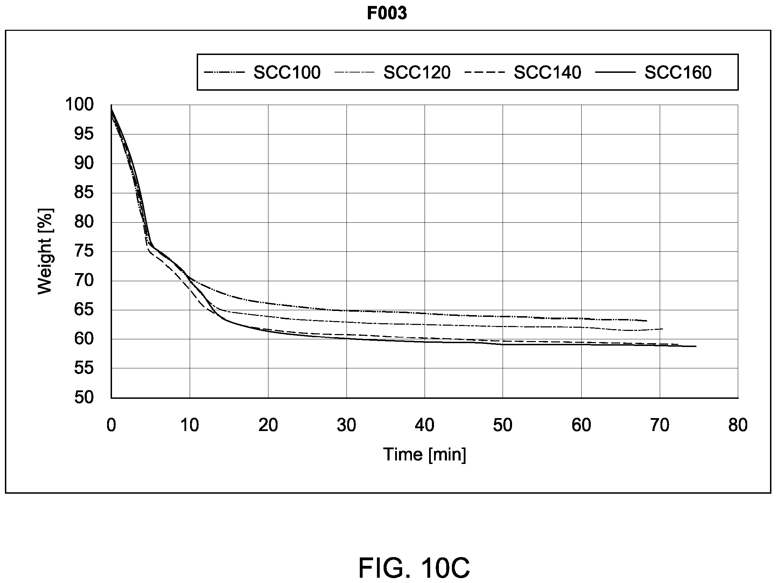

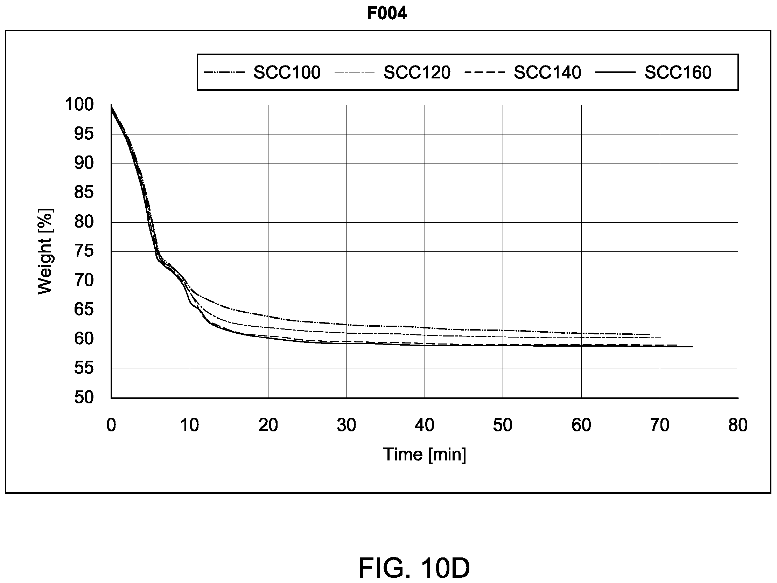

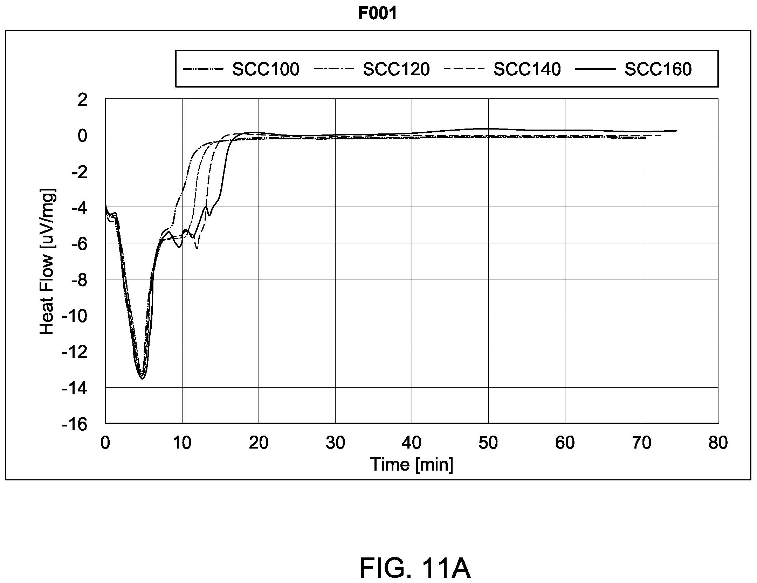

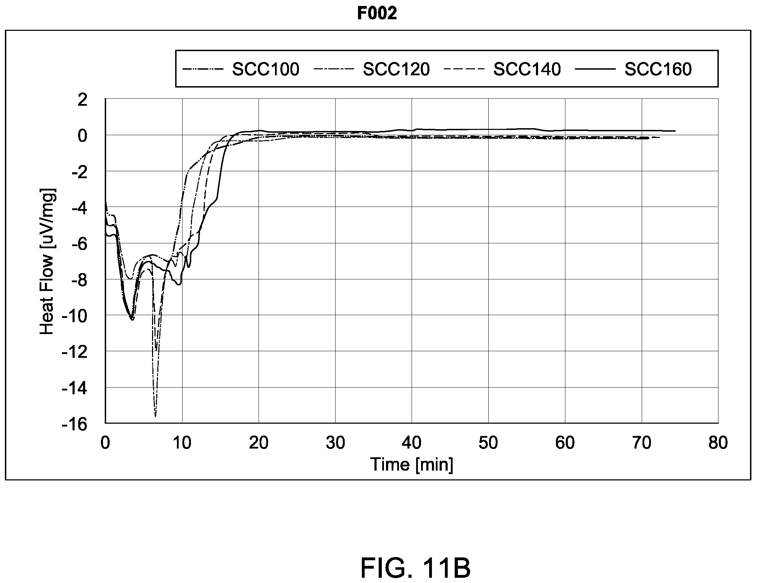

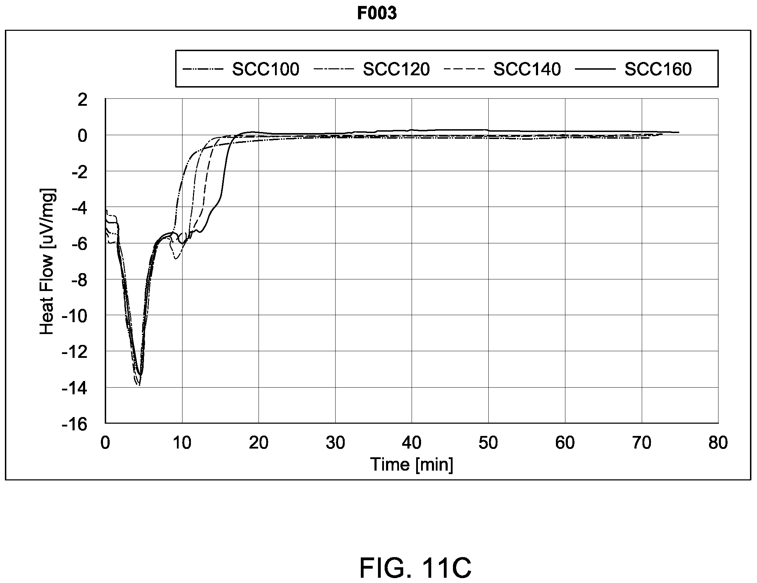

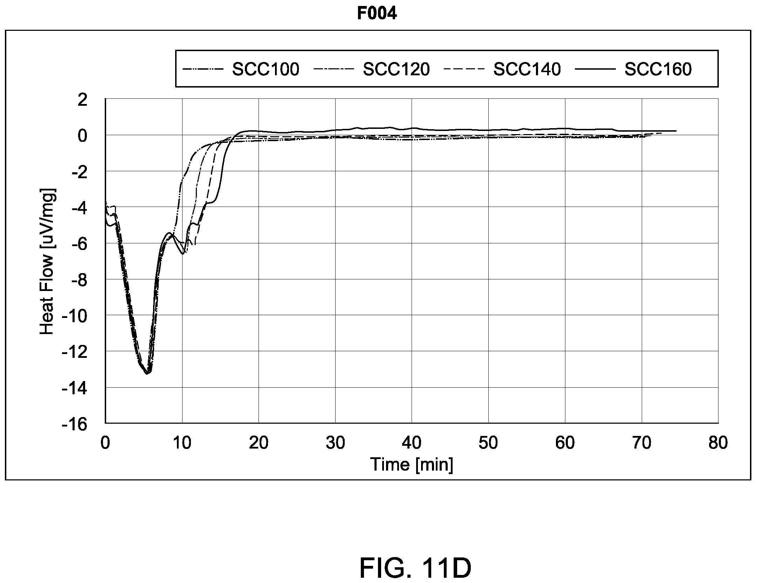

Figure 11 shows the heat flow traces from the same TGA experiments presented in Figure 10. All formulations and cure temperatures show a significant endothermic peak at the beginning of the simulated cure cycle (between 0 and 10mins on the x-axis). This is related to the flashing off of the volatile organic compounds (VOC's) in the sol-gel formulation. Between 10 and 20mins, several peaks are likely associated with the formation of the network and densification of the sol-gel. The intensity of these peaks are not as pronounced when the sol-gels are cured at lower temperatures. This indicates that even though a significant portions of the VOC's may have been removed the lower cure temperatures, the sol-gel network may not have fully cured or condensed.

The results presented in Figure 10 and Figure 11 indicated that a cure cycle of 140°C for 60mins was sufficient for formulations F001, F002 & F003 while a cure cycle of 120°C for 120mins could be used for F004.

TGA experiments have not been performed on formulation F005. However, given the relatively similar silane chemistry of F004 (i.e. MAPTMS & ZPO), a cure cycle of 120°C for 120mins was used for F005 as well.

### Pendulum Damping Test

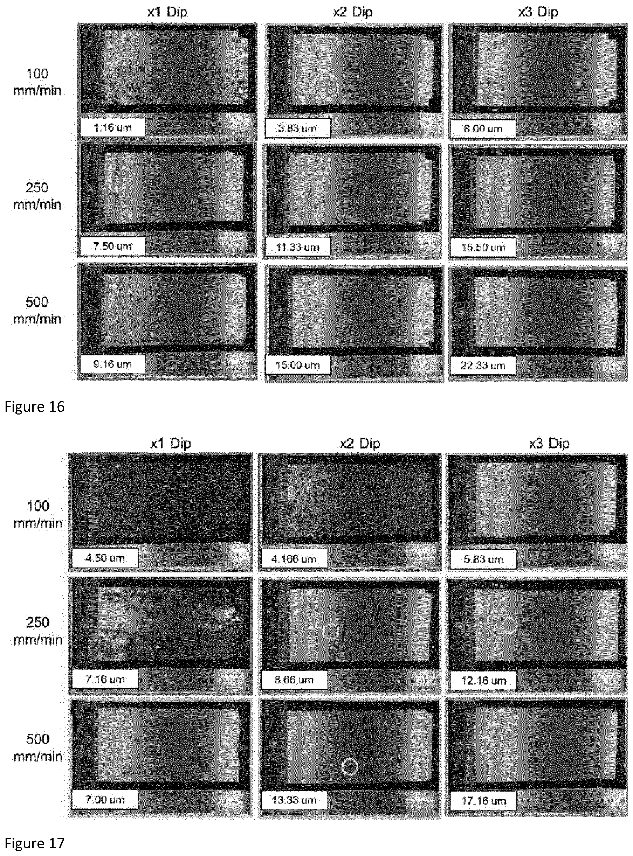

The pendulum damping tests were performed on cured samples. The results presented used an R-ICF substrate from Q-Lab (mild steel with iron phosphate pre-treatment). The dip speed was set to 100mm/min for all samples. The results are presented in Figure 16. Formulations F001-to-F004 were all within the range of between 180 & 195 seconds for the oscillations to fall from 6° to 3°. Formulation F003 was the hardest with F004 next and F001 & F003 the softest of the four. F005 was noticeably softer that the other four formulations with a time of 165 seconds. This indicates that it is a softer coating possibly due to the use of APTES instead of MAAH during synthesis.

### Pencil Hardness Testing

The results from the pencil hardness test for each of the four sol-gel formulations can be seen in Table 43. The sol-gel coatings were applied to aluminium 'A' spec Q-panels. The 'Pencil Hardness' is the specific pencil that does not mark the coating. The 'Plastic Deformation' is the pencil hardness that results in a mark on the coating. The 'Cohesive Failure' is the hardness that results in removal of the coating. Note that 'Plastic Deformation' and 'Cohesive Failure' can occur at the same pencil hardness value. The results show that the pencil hardness test has difficulty in distinguishing between the different coatings compared to the pendulum damping test. The only noticeable difference was that F004 results in 'Cohesive Failure' at a slight higher hardness (3H instead of 2H).

**Table 43: Results from pencil hardness testing of different formulation.**

| Formulation | Pencil Hardness | Plastic Deformation | Cohesive Failure |
|---|---|---|---|
| F001 | H | 2H | 2H |
| F002 | H | 2H | 2H |
| F003 | H | 2H | 2H |
| F004 | H | 2H | 3H |
| F005 | TBC | TBC | TBC |

### Water Contact Angle (WCA)

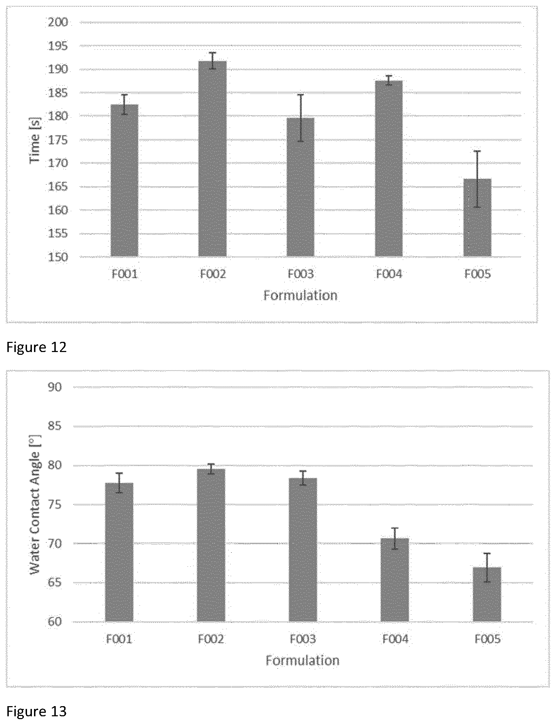

The water contact angle results are presented in Figure 13. All formulations gave contact angles less than 90° indicating that all surfaces are slightly hydrophilic. The three sol-gels containing PhTEOS (i.e. F001-to-F003) had the highest contact angle compared to either F004 or F005. Formulation F005 had the lowest contact angle of all sol-gels investigated. This is believed to be attributed to the use of APTES and BTSPA in the sol-gel formulation which are known to be highly reactive.

### Neutral Salt Spray (NSS) Testing

Various studies were conducted on the performance of the sol-gel coatings in a neutral salt spray (NSS) environment. The individual studies are separated by substrate type and sol-gel formulation.

### R-ICF Q-panels (Mild Steel with Iron Phosphate Pre-Treatment) & F001-to-F004

Examination of the corrosion protection performance was carried out as follows: Sol-gel formulations (F001 - F004) on substrates were evaluated, at different dip speeds (100, 250 & 500mm/min) and different numbers of coatings (x1, x2 & x3). The goal was to determine if a thicker sol-gel coating or a multi-coat system would improve the level of corrosion protection in an NSS. For this study, R-ICF mild-steel pre-treated with iron phosphate Q-panels were used as-received with no additional surface treatment.

Figure 14 to Figure 17 shows the R-ICF panels after 24 hrs in an NSS for formulations F001-to-F004. The photographs show that all single coat (x1 dip) systems exhibited signs of pitting and corrosion after 24 hrs. Photographs highlighted with a red border show excessive signs of corrosion. Those in orange showed some initial signs of corrosion / pitting. Photographs in green showed no evidence of failure. It was only several of the multi-dip systems (x2 & x3) that remained clear from any signs of corrosion. Over the course of approximately 336hrs (2 weeks) all coated systems began to show signs of corrosion. For all four formulations, it was the x3 coated systems at 500mm/min that lasted the longest before they began to fail.

### Mild steel, galvanised steel and a 6000 series aluminium alloy

The three substrates under investigation with the sol-gel formulations are mild steel, galvanised steel and a 6000 series aluminium alloy. Some of these substrates were also supplied pre-treated with a 3^{rd} party silane (referred to as 3PS) to be used as a benchmark comparison.

A number of different sol-gel systems were investigated as part of this work. A total of 10 sol-gel systems were considered and are outlined in Table. Each system was given a unique identifying code 'A'-to-'J'. As can be seen, several combinations of F001, F003, F004 & F005 were considered. F002 was excluded from this study due to its similarity to F001. Several single coat and dual coat systems were investigated.

**Table 44: Sol-gel systems investigated**

| | **1st Sol-Gel Coat** | | | | | | **2nd Sol-Gel Coat** | | | | | |
|---|---|---|---|---|---|---|---|---|---|---|---|---|
| **Sol-Gel System** | **form.** | **EtOH[%]** | **Additive 1** | **Addtive2** | **Dlp Speed [mm/mln]** | **Cure Cycle** | **Form.** | **EtOH [%]** | **Additive 1** | **Additive 2** | **Dlp Speed [mm/mln]** | **Cure Cycle** |
| A | F001 | 0 | Levasil | BTA [1%] | 500 | 140C for comm | N/A | N/A | N/A | N/A | N/A | N/A |
| B | F001 | 0 | Levasil | BTA [1%] | 500 | 140C for 60min | N/A | N/A | N/A | N/A | N/A | N/A |
| C | F001 | 0 | Levasil | BTA [1%] | 500 | 140 for min | N/A | N/A | N/A | N/A | N/A | N/A |
| D | F001 | 0 | Levasil | BTA [1%] | 500 | 140C for 60min | F001 | 0 | Levasil | BTA [1%] | 500 | 140C for min |
| E | F003 | 0 | N/A | BTA [1%] | 500 | 140C for 60min | N/A | N/A | N/A | N/A | N/A | N/A. |
| F | F003 | 0 | N/A | ETA [1%] | 500 | 140C for 60 min | F003 | ο | N/A | BTA [1%] | 500 | 140C for 60min |
| C | F004 | 0 | N/A | BTA [1%] | 500 | 120C for 120min | N/A | N/A | N/A | N/A | N/A | N/A |
| H | F004 | 0 | N/A | BTA [1%] | 500 | 120C for 120min | F004 | 0 | N/A | BTA [L%] | 500 | 120C for 120min |
| I | F005 | 10 | BTSPA [5.0%] | BTA [1%] | 500 | 120C for 120min | N/A | N/A | N/A | N/A | N/A | N/A |
| j | Pd05 | 10 | BTSPA [5.0%] | BTA [%] | 500 | 120C for 120min | F001 | | Levasil | BTA [1%] | 500 | 140 for 60min |

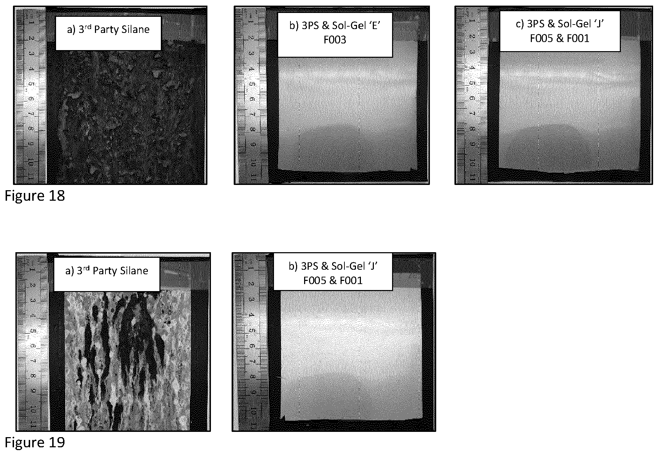

The coated panels were evaluated in a neutral salt spray for 336 hrs (2 weeks). Figure 18 to Figure 21 show photographs of the best performing panels after 336hrs NSS from this study. For comparison, a panel without any sol-gel solutions of the present invention was included to highlight the benefit and additional level of protection obtained by using these systems.

Figure 18 shows a series of mild steel panels that were all pre-treated with a 3^{rd} party silane (3PS). Figure 18 (a) shows that the 3^{rd} party silane does not provide adequate protection on its own. Figure 18 (b) & (c) show sol-gel systems 'E' & `J' respectively applied on top of the 3PS. Both solutions remained in excellent condition after 336hrs NSS exposure.

Figure 19 shows galvanised steel panels that were all pre-treated with a 3^{rd} party silane (3PS). Figure 19 (a) shows that the 3^{rd} party silane alone does not provide adequate protection on its own. Figure 19 (b) shows sol-gel system 'J' applied on top of the 3PS. After 336hrs NSS, the panel remained in good condition.

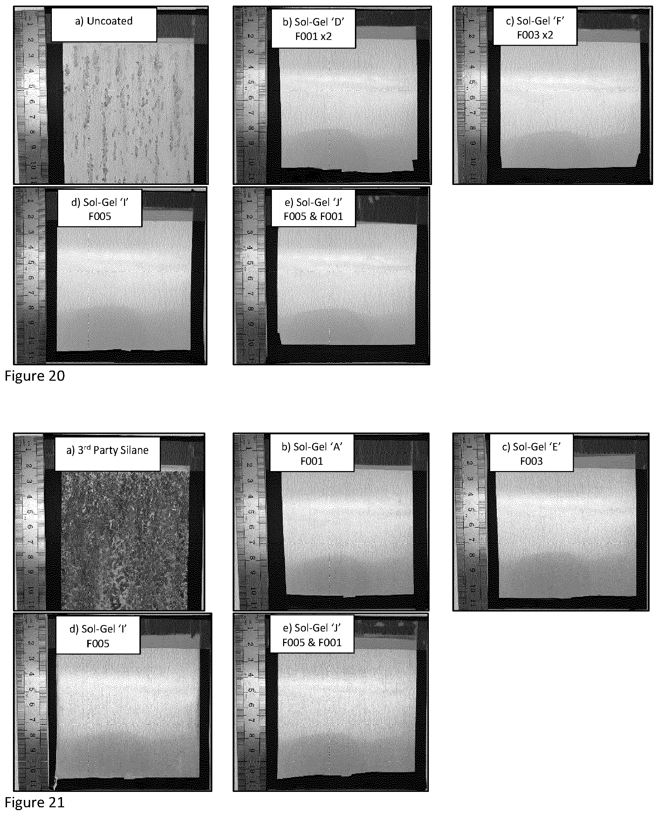

Figure 20 shows substrate materials made from a 6000-series aluminium alloy. Figure 20 (a) show a panel with no additional surface treatment. As can be seen, the sample exhibits excessive corrosion that were visible after less than 1 day. All four aluminium panels shown in Figure 20 (b), (c), (d) & (e) that were coated with a sol-gel remain in excellent condition after 336 hrs and show no signs of corrosion.

Figure 21 shows 6000-series aluminium pre-treated with the 3^{rd} party silane. As before, Figure 21 (a) shows that the 3^{rd} party silane alone does not provide adequate protection on its own. All four sol-gel coating systems provided excellent corrosion protection up to 336hrs of NSS exposure.

### Anodised Aluminium 2024T3 & F004

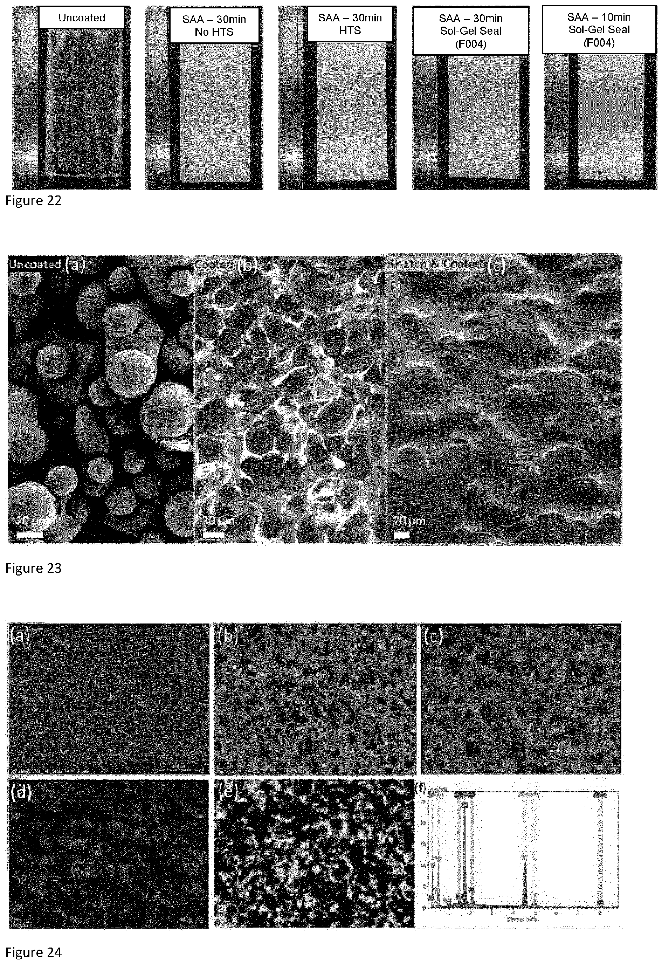

The effect of using a sol-gel as a sealer after an anodising process was investigated using aluminium alloy grade AA2024T3. Panels of aluminium were anodised in sulphuric acid for 10 or 30 mins and then coated as described above. Figure 22 shows AA2024T3 with five different combinations of surface treatments after 500hrs in an NSS. As can be seen, the uncoated panel (left hand side) exhibited excessive signs of corrosion that were evident after even a few hours. The next panel (2^{nd} from left) was anodised for 30 mins and was not sealed at all. While it performed better than uncoated, there were noticeable signs of pitting. The middle panel in Figure 22 was identical as the previous, however, it was subjected to a hot thermal seal (HTS) in deionised water at 90_{°}C for 20mins. This resulted in significantly better corrosion protection with little to no evidence of pitting or corrosion. The panels 2^{nd} from right and rightmost were anodised in sulphuric acid for 30mins and 10mins respectively and then sealed with formulation F004. Both samples also exhibited little to no signs of corrosion. This demonstrates that a sol-gel can impart the same levels of corrosion protection as a traditional HTS while also offering the potential for alternative surface finishes (e.g. glossy).

### Sol-Gel Coatings on Additive Manufactured Parts

Additive manufacturing has opened up new opportunities for the production of extremely complex shapes that would otherwise be impossible *via* traditional manufacturing methods. However, this also presents new coating challenges. The printed parts, particularly metal ones, can have a very thick oxide layer. Line of sight coating methods may also have difficulty coating the entire part.

The 3D printing material being used is titanium grade 23 (G23 / Ti-6Al-4V ELI). However, the coating systems will be applicable to any 3 D printed metal or selected plastics parts. The sol-gel was based on formulation F005. Figure 23 shows scanning electron microscopy (SEM) images of an uncoated 3D printed part as well as two that were coated with the F005 sol-gel (one of these samples was pre-etched with a hydrofluoric acid). The uncoated part shows an area with what appear to be particles of the Ti G23 powder that are loosely sintered together. Figure 23 (b) shows how the sol-gel appears to contour to the printed surface. Figure 23 (c) shows a part that was first abraded and the HF etched prior to coating. The abrasion has had a noticeable effect in smoothing out the 3D printed surface.

Figure 24 shows energy dispersive x-ray (EDX) analysis of a coated 3D printed part. The elements Silicon (Si) & Zirconium (Zr) are associated with the sol-gel coating while Titanium (Ti) & Aluminium (Al) are associated with the substrate. The elemental maps show that the coating does produce a coating with uniform thickness. This is likely due to the relatively rough nature of the 3D printed surface and low viscosity of the sol-gel.

It will of course be understood that various modifications can be made and that the scope of the invention is defined by the appended claims.

## Claims

1. A hybrid sol-gel coating formulation comprising the following:
(a) an organosilane or a mixture of organosilanes, comprising at least the organosilane precursor, 3-(Trimethoxysilyl)propyl methacrylate (MAPTMS);
(b) a metal complex, comprising Zirconium and a ligand;
(c) an additive and optionally a solvent;
wherein the additive comprises bis[3-(trimethoxysilyl)propyl]amine (BTSPA).

2. A formulation, as claimed in claim 1, wherein a catalyst is included, optionally wherein the catalyst is nitric acid (HNO₃).

3. A formulation, as claimed in claim 1, further comprising the additive benzotriazole (BTA).

4. A formulation, as claimed in claim 1, wherein the solvent comprises any one or more alcohol(s) selected from C₁ - C₄ alcohols.

5. A formulation, as claimed in claim 4, wherein the alcohol comprises ethanol (EtOH).

6. A formulation, as claimed in claim 1, wherein BTSPA is in the range of 0.5 - 10% w/w of the sol-gel.

7. A formulation, as claimed in claim 3, wherein BTA is in the range of 0.2 - 1.5% w/w of the sol-gel.

8. A formulation, as claimed in claim 6, wherein the BTSPA is catalysed by using 0.1M HNO₃ prior to the addition in step (d).

9. A formulation, as claimed in claim 1, wherein the organosilane comprises one or more of organosilane precursors selected from the group comprising: phenyltriethoxysilane (PhTEOS) and TEOS.

10. A formulation, as claimed in claim 1, wherein the metal complex comprises Titanium; optionally wherein the metal complex comprises Zirconium (IV) propoxide and / or titanium isopropoxide.

11. A formulation, as claimed in claim 1, wherein the metal complex comprises a monodentate or a bidentate ligand.

12. A formulation, as claimed in claim 11, wherein the ligand comprises methacrylic acid (MAAH) or (3-aminopropyl)triethoxysilane (APTES).

13. A formulation, as claimed in claim 1, wherein the molar ratio of ingredients comprises a molar ratio of organosilane precursors : metal complex of 50 : 50 to 99 : 1, and preferably in the ratio of 80 : 20.

14. A method for preparing a hybrid sol-gel formulation, the method comprising the following steps:
(a) Hydrolysing a silane precursor;
(b) Chelating a metal to form a metal complex;
(c) Combining the organosilane precursor and the metal complex to form an intermediate sol;
(d) Hydrolysing the intermediate sol to form a pre-final sol, and
(e) adding an additive and optionally a solvent to form a final sol; wherein said silane precursors comprise at least the organosilane precursor, 3-(Trimethoxysilyl)propyl methacrylate (MAPTMS) and wherein said metal complex comprises Zirconium (Zr) and a ligand; and preferably wherein in step (a), the silane precursors are hydrolysed with an aqueous solution of HNOs, and wherein the HNO₃ solution is added dropwise to the mixture; and wherein the additive comprises bis[3-(trimethoxysilyl)propyl]amine (BTSPA).

15. A coated substrate prepared by coating the formulation claimed in claim 1 onto a surface, preferably wherein the coated substrate comprises any one or more materials selected from a metal, a plastics material, a metal coated plastics material, a 3D printed and / or an additive manufactured product.

## Patentansprüche

1. Eine Sol-Gel-Hybridbeschichtungsformulierung, die Folgendes beinhaltet:
(a) ein Organosilan oder ein Gemisch aus Organosilanen, beinhaltend mindestens den Organosilanvorläufer 3-(Trimethoxysilyl)propylmethacrylat (MAPTMS);
(b) einen Metallkomplex, beinhaltend Zirconium und einen Liganden;
(c) ein Additiv und optional ein Lösungsmittel;
wobei das Additiv Bis[3-(trimethoxysilyl)propyl]amin (BTSPA) beinhaltet.

2. Formulierung gemäß Anspruch 1, wobei ein Katalysator enthalten ist, wobei es sich optional bei dem Katalysator um Salpetersäure (HNO₃) handelt.

3. Formulierung gemäß Anspruch 1, ferner beinhaltend das Additiv Benzotriazol (BTA).

4. Formulierung gemäß Anspruch 1, wobei das Lösungsmittel einen oder mehrere aus C₁-C₄-Alkoholen ausgewählte(n) Alkohol(e) beinhaltet.

5. Formulierung gemäß Anspruch 4, wobei der Alkohol Ethanol (EtOH) beinhaltet.

6. Formulierung gemäß Anspruch 1, wobei BTSPA im Bereich von 0,5-10 Gewichts-% des Sol-Gels ausmacht.

7. Formulierung gemäß Anspruch 3, wobei BTA im Bereich von 0,2-1,5 Gewichts-% des Sol-Gels ausmacht.

8. Formulierung gemäß Anspruch 6, wobei das BTSPA durch Verwenden von 0,1 M HNO₃ vor dem Zugeben in Schritt (d) katalysiert wird.

9. Formulierung gemäß Anspruch 1, wobei das Organosilan einen oder mehrere von Organosilanvorläufern beinhaltet, die aus der Phenyltriethoxysilan (PhTEOS) und TEOS beinhaltenden Gruppe ausgewählt sind .

10. Formulierung gemäß Anspruch 1, wobei der Metallkomplex Titan beinhaltet; wobei optional der Metallkomplex Zirconium(IV)-propoxid und/oder Titanisopropoxid beinhaltet.

11. Formulierung gemäß Anspruch 1, wobei der Metallkomplex einen einzähnigen oder einen zweizähnigen Liganden beinhaltet.

12. Formulierung gemäß Anspruch 11, wobei der Ligand Methacrylsäure (MAAH) oder (3-Aminopropyl)triethoxysilan (APTES) beinhaltet.

13. Formulierung gemäß Anspruch 1, wobei das Molverhältnis der Inhaltsstoffe ein Molverhältnis von Organosilanvorläufern : Metallkomplex von 50 : 50 bis 99 : 1 und vorzugsweise im Verhältnis von 80 : 20 beinhaltet.

14. Ein Verfahren zum Herstellen einer Sol-Gel-Hybridformulierung, wobei das Verfahren die folgenden Schritte beinhaltet:
(a) Hydrolysieren eines Silanvorläufers;
(b) Chelieren eines Metalls, um einen Metallkomplex zu bilden;
(c) Verbinden des Organosilanvorläufers und des Metallkomplexes, um ein Zwischensol zu bilden;
(d) Hydrolysieren des Zwischensols, um ein vorläufiges Sol zu bilden, und
(e) Zugeben eines Additivs und optional eines Lösungsmittels, um ein endgültiges Sol zu bilden; wobei die Silanvorläufer mindestens den Organosilanvorläufer 3-(Trimethoxysilyl)propylmethacrylat (MAPTMS) beinhalten und wobei der Metallkomplex Zirconium (Zr) und einen Liganden beinhaltet; und wobei vorzugweise
in Schritt (a) die Silanvorläufer mit einer wässrigen Lösung von HNO₃ hydrolysiert werden und wobei die HNO₃-Lösung dem Gemisch tropfenweise zugegeben wird; und wobei das Additiv Bis[3-(trimethoxysilyl)propyl]amin (BTSPA) beinhaltet.

15. Ein beschichtetes Substrat, das durch Auftragen der Formulierung gemäß Anspruch 1 auf eine Oberfläche hergestellt ist, wobei vorzugsweise das beschichtete Substrat ein oder mehrere Materialien beinhaltet, die aus einem Metall, einem Kunststoff, einem metallbeschichteten Kunststoff, einem 3D-gedruckten und/oder einem additiv gefertigten Produkt ausgewählt sind.

## Revendications

1. Une formulation de revêtement sol-gel hybride comprenant les éléments suivants :
(a) un organosilane ou un mélange d'organosilanes, comprenant au moins le précurseur d'organosilane, le méthacrylate de 3-(triméthoxysilyl)propyle (MAPTMS) ;
(b) un complexe métallique, comprenant du zirconium et un ligand ;
(c) un additif et facultativement un solvant ;
dans laquelle l'additif comprend de la bis[3-(triméthoxysilyl)propyl]amine (BTSPA).

2. Une formulation, telle que revendiquée dans la revendication 1, dans laquelle un catalyseur est inclus, facultativement dans laquelle le catalyseur est l'acide nitrique (HNO₃).

3. Une formulation, telle que revendiquée dans la revendication 1, comprenant en outre l'additif benzotriazole (BTA).

4. Une formulation, telle que revendiquée dans la revendication 1, dans laquelle le solvant comprend un ou plusieurs alcools quelconques sélectionnés parmi des alcools en C₁ à C₄.

5. Une formulation, telle que revendiquée dans la revendication 4, dans laquelle l'alcool comprend de l'éthanol (EtOH).

6. Une formulation, telle que revendiquée dans la revendication 1, dans laquelle la BTSPA est comprise dans la gamme de 0,5 à 10 % en poids par poids du sol-gel.

7. Une formulation, telle que revendiquée dans la revendication 3, dans laquelle le BTA est compris dans la gamme de 0,2 à 1,5 % en poids par poids du sol-gel.

8. Une formulation, telle que revendiquée dans la revendication 6, dans laquelle la BTSPA est catalysée à l'aide de HNO₃ 0,1 M préalablement à l'ajout à l'étape (d).

9. Une formulation, telle que revendiquée dans la revendication 1, dans laquelle l'organosilane comprend un ou plusieurs des précurseurs d'organosilane sélectionnés dans le groupe comprenant : le phényltriéthoxysilane (PhTEOS) et le TEOS.

10. Une formulation, telle que revendiquée dans la revendication 1, dans laquelle le complexe métallique comprend du titane ; facultativement dans laquelle le complexe métallique comprend du propoxyde de zirconium (IV) et/ou de l'isopropoxyde de titane.

11. Une formulation, telle que revendiquée dans la revendication 1, dans laquelle le complexe métallique comprend un ligand monodentate ou bidentate.

12. Une formulation, telle que revendiquée dans la revendication 11, dans laquelle le ligand comprend de l'acide méthacrylique (MAAH) ou du (3-aminopropyl)triéthoxysilane (APTES).

13. Une formulation, telle que revendiquée dans la revendication 1, dans laquelle le rapport molaire d'ingrédients comprend un rapport molaire de précurseurs d'organosilane/complexe métallique de 50/50 à 99/1, et de préférence dans le rapport de 80/20.

14. Un procédé pour préparer une formulation sol-gel hybride, le procédé comprenant les étapes suivantes :
(a) hydrolyse d'un précurseur de silane ;
(b) chélation d'un métal afin de former un complexe métallique ;
(c) combinaison du précurseur d'organosilane et du complexe métallique afin de former un sol intermédiaire ;
(d) hydrolyse du sol intermédiaire afin de former un sol préfinal, et
(e) ajout d'un additif et facultativement d'un solvant afin de former un sol final ; dans lequel lesdits précurseurs de silane comprennent au moins le précurseur d'organosilane, le méthacrylate de 3-(triméthoxysilyl)propyle (MAPTMS) et dans lequel ledit complexe métallique comprend du zirconium (Zr) et un ligand ; et de préférence
dans lequel à l'étape (a), les précurseurs de silane sont hydrolysés avec une solution aqueuse de HNO₃, et dans lequel la solution de HNO₃ est ajoutée goutte à goutte au mélange ; et dans lequel l'additif comprend de la bis[3-(triméthoxysilyl)propyl]amine (BTSPA).

15. Un substrat revêtu préparé par revêtement de la formulation revendiquée dans la revendication 1 sur une surface, le substrat revêtu comprenant de préférence une ou plusieurs matières quelconques sélectionnées parmi un métal, une matière plastique, une matière plastique revêtue de métal, un produit imprimé en 3D et/ou un produit de fabrication additive.
